# EUROPEAN PATENT SPECIFICATION

(11) **EP 4 181 084 B1**
(45) Date of publication and mention of the grant of the patent: **10.06.2026**
(21) Application number: 21208124.4
(22) Date of filing: 15.11.2021
(51) Int. Cl.: G06V 20/52, G06V 10/82, G06V 30/424, G06V 10/74, G06V 10/75, G06F 18/22

(54) **METHOD, APPARATUS AND SYSTEM FOR DETECTION OF PARTICULAR CONTENT**
VERFAHREN, VORRICHTUNG UND SYSTEM ZUR BESTIMMUNG EINES BESTIMMTEN INHALTS
PROCÉDÉ, APPAREIL ET SYSTÈME DE DÉTECTION D'UN CONTENU PARTICULIER

(43) Date of publication of application: 17.05.2023
(73) Proprietor: Deutsche Post AG, 53113 Bonn (DE)
(72) Inventor: Özyigit, Ali, Bonn (DE)
(74) Representative: Cohausz & Florack

(56) References cited:
- US-A1- 2003 206 643
- US-A1- 2008 192 978
- JIANG WEINA ET AL: "Local Binary Patterns for Printer Identification based on Texture Analysis", CS-11-05, COMPUTING SCIENCES REPORT, DEPARTMENT OF COMPUTING, UNIVERSITY OF SURREY, 1 September 2011 (2011-09-01), pages 1 - 17, XP055915520, Retrieved from the Internet <URL:https://openresearch.surrey.ac.uk/esploro/outputs/book/Local-Binary-Patterns-for-Printer-Identification/99514183602346> [retrieved on 20220426]
- DLAMINI NKOSIKHONA ET AL: "Author Identification from Handwritten Characters using Siamese CNN", 2019 INTERNATIONAL MULTIDISCIPLINARY INFORMATION TECHNOLOGY AND ENGINEERING CONFERENCE (IMITEC), IEEE, 21 November 2019 (2019-11-21), XP033727508

## Description

### FIELD OF THE DISCLOSURE

The present disclosure generally relates to the detection of particular, e.g. of dangerous and/or illegal, content, in a consignment unit.

### BACKGROUND

Mail bombs such as e.g. letter bombs or parcel bombs or consignments containing substances harmful to health continue to be a thread for public life in view of their potential to be used by terrorists and criminals and in view of difficulties involved in detecting a mail bomb before humans are harmed as a result of an explosion. These difficulties can be attributed to the fact that usually, a shipment or consignment carrying explosive substances or substances that are harmful to health cannot be distinguished from a harmless shipment or consignment without an inspection of its content. Thereby, because mail bombs are usually constructed to explode upon opening, an inspection of the content of a suspicious consignment requires use of dedicated sensor equipment. For example, an exemplary consignment unit examination apparatus for examining shipments or consignments is disclosed in EP 3 537 133 A1 filed by the present applicant The apparatus disclosed therein allows for examining contents of consignments thereby in particular allowing to detect particular content contained in consignment units such as for example explosive substances. Also acknowledged is the following prior art:
US 2003/206643 A1 (SANSONE RONALD P [US]) 6 November 2003 (2003-11-06)
US 2008/192978 A1 (RUNDLE ALFRED T [US] ET AL) 14 August 2008 (2008-08-14)

While such inspection is possible using such dedicated sensor equipment, in many situations it would already be helpful to prevent successful mail bomb attacks to be able to find suspicious consignments in a short time. This is because mail bombs are unfortunately often used in series were a criminal or terrorists sends multiple consignments containing explosive or harmful substances to multiple recipients. Therefore, in case a consignment is found that contains such substances using standard inspection systems already employed or in the worst case as a result of an event such as an explosion, it has to be assumed that more consignments containing such substances are in the process of being delivered. Presently, in such situation nodes involved in mail distribution such as mail distribution centers, shipping centers, transshipment centers, parcel centers, sorting centers, warehouses, and/or fulfillment centers are informed where consignments under processing are then mostly visually inspected. However, given that e.g. the German post delivered and processed about 1.8 Billion parcels in the year 2020, i.e. about 6 Million consignments per workday, a corresponding inspection of each consignment being processed is currently extremely difficult.

### SUMMARY OF SOME EMBODIMENTS OF THE PRESENT DISCLOSURE

It is inter alia an objective of the present invention to provide a method, an apparatus and a computer program that allows identifying and/or determining shipments or consignments as potentially containing particular content such as explosive and/or harmful substances and/or illegal goods such as weapons, drugs or the like, as set out in the appended claims.

According to a first exemplary aspect of the present disclosure, a method is disclosed, said method comprising:
- obtaining or causing obtaining trigger information associated with at least part of attribute information associated with at least one first consignment unit;
- determining or causing determining whether or not attribute information associated with at least one second consignment unit is stored in a database that is similar to the attribute information associated with the at least one first consignment unit;
   if attribute information associated with at least one second consignment unit is determined to be stored in the database that is similar to the attribute information associated with the at least one first consignment unit;
- generating alert information or causing alert information to be generated.

For the method according to the first aspect of the present disclosure, at least one first apparatus is furthermore disclosed (and subsequently referred to as at least one apparatus according to the first aspect of the present disclosure, respectively) that is configured to perform and/or control the respective method or comprises respective means for performing and/or controlling the steps of the respective method. In this case, it is possible either for all the steps of the method to be controlled, or for all the steps of the method to be performed, or for one or more steps to be controlled and one or more steps to be performed. One or more of the means can also be performed and/or controlled by the same unit.

The means of the disclosed apparatus can be implemented in hardware and/or software. They may comprise for instance a processor for executing computer program code for realizing the required functions, a memory storing the program code, or both. Alternatively, they could comprise for instance circuitry that is designed to realize the required functions, for instance implemented in a chipset or a chip, like an integrated circuit. The disclosed at least one apparatus according to the first aspect may comprise a single means for all functions, a common plurality of means for all functions, or a plurality of different means for different functions.

For the method according to the first aspect of the present disclosure, an apparatus (e.g. the at least one apparatus according to the first aspect) is furthermore disclosed (and subsequently referred to as the at least one apparatus according to the first aspect of the present disclosure) that comprises at least one processor and at least one memory including computer program code, the at least one memory and the computer program code configured to, with the at least one processor, cause an apparatus, for instance the apparatus according to the first aspect, at least to perform and/or to control the method according to the first aspect of the present disclosure. In this case, it is possible either for all the steps of the respective method to be controlled, or for all the steps of the respective method to be performed, or for one or more steps to be controlled and one or more steps to be performed.

The at least one apparatus according to the first aspect of the present disclosure may be understood as corresponding to, comprising or being comprised by a control apparatus of a logistics system. Thereby, being comprised by is to be understood such that the at least one apparatus may for example correspond to one of more processors of the control apparatus. In an exemplary embodiment, the at least one apparatus according to the first aspect of the present disclosure corresponds to or comprises or is comprised by at least one stationary or portable personal computer, at least one server, at least one server system, at least one mobile device and/or one or more processors of the stationary or portable personal computer, the at least one server, the at least one server system, the at least one mobile device. Thereby, in an exemplary embodiment, a mobile device corresponds to or comprises e.g. a smartphone, a smart watch, a smart band, a tablet computer or a notebook computer. In an exemplary embodiment, the mobile device may communicate with a server or server system for carrying out some or all of the steps of the method according to the first aspect The at least one apparatus according to the first aspect may be connected to the Internet and/or other communication networks, e.g. one or more Wireless Local Area Networks (WLANs) and/or one or more Local Area Networks (LANs) and/or other cellular networks such as 2G/3G/4G/5G cellular communication networks. The 2G/3G/4G/5G cellular radio communication standards are developed by the 3GPP and presently available under http://www.3gpp.org/. It is however to be understood that the invention is not limited to this.

The at least one apparatus according to the first aspect may e.g. provided in the context of a logistics system for processing and delivering shipments or consignments, e.g. the at least one apparatus according to the first aspect may be integrated in the backend of a logistics services providing company.

For of the method according to the first aspect of the present disclosure, a system is furthermore disclosed that comprises at least one apparatus (e.g. the at least one apparatus according to the first aspect) that is configured to perform and/or control the respective method or has means for performing and/or controlling the steps of the respective method. In this case, it is possible either for all the steps of the respective method to be controlled, or for all the steps of the respective method to be performed, or for one or more steps to be controlled and one or more steps to be performed.

For the method according to the first aspect of the present disclosure, a non-transitory computer readable storage medium is further disclosed, in which computer program code is stored. The computer program code may for example be the below disclosed computer program code. The computer program code could be stored in the computer readable storage medium in the form of instructions encoding the computer-readable storage medium. The computer readable storage medium may be intended for taking part in the operation of an apparatus (e.g. a device), like an internal or external hard disk of a computer, or be intended for distribution of the program code, like an optical disc.

For the method according to the first aspect of the present disclosure, a computer program is furthermore disclosed that comprises program instructions that cause a processor to perform and/or control the respective method when the computer program runs on the processor. In an exemplary embodiment, such computer program may correspond to, may be part of, or may be incorporated in a source code and/or a device recognizing code. In this specification, a processor is intended to be understood to mean control units, microprocessors, micro control units such as microcontrollers, digital signal processors (DSP), application-specific integrated circuits (ASICs) or field programmable gate arrays (FPGAs), inter alia.

In this case, it is possible either for all the steps of the method (which in an exemplary embodiment may be understood to be conditional steps of the method) to be controlled, or for all the steps of the method to be performed, or for one or more steps to be controlled and one or more steps to be performed. By way of example, the computer program may be distributable via a network such as the internet, a telephone or mobile radio network and/or a local area network, for example. The computer program may at least in part be software and/or firmware of a processor. The computer program may equally be implemented at least in part as hardware. By way of example, the computer program may be stored on a computer-readable storage medium, e.g. a magnetic, electric, electromagnetic, optical and/or other kind of storage medium. By way of example, the storage medium may be part of the processor, for example a (nonvolatile or volatile) program memory of the processor or a part thereof. By way of example, the storage medium is substantive, that is to say tangible, and/or non-transitory.

According to a second aspect of the present disclosure, a system is disclosed comprising at least one first apparatus configured to perform at least the method according to the first aspect, and at least one second apparatus configured to perform a method comprising:
- obtaining or causing of obtaining the alert information from the at least one first apparatus; and at least one of:
- displaying or causing of displaying an alert based on the alert information;
- interrupting or causing interrupting a logistics processing of the at least one second consignment unit based on the alert information.

In an exemplary embodiment, the system according to the second aspect corresponds to or comprises the logistics system as disclosed further herein.

In an exemplary embodiment, the at least one second apparatus corresponds to or is comprised by at least one of a stand-alone computer; a mobile device; an apparatus installed at a node of the logistics system; a consignment unit sorting machine and/or a consignment unit examination apparatus; a transport vehicle for transporting consignment units; an unmanned aerial vehicle, UAV; an unmanned ground vehicle, UGV (e.g. a robot); a control apparatus of a conveyor belt.

In an exemplary embodiment, the at least one first apparatus is configured to communicate with the at least one second apparatus (e.g. for the at least one first apparatus to provide and/or for the at least one second apparatus to obtain alert information) via a wired and/or wireless network connection. The at least one first apparatus and/or the at least one second apparatus are in an exemplary embodiment connected to the Internet and/or other communication networks, e.g. to one or more Wireless Local Area Networks (WLANs) and/or to one or more Local Area Networks (LANs) and/or to one or more cellular networks such as 4G or 5G networks e.g. as standardized by the 3GPP.

Exemplary embodiments of all aspects of the present disclosure may have one or more (or for instance all) of the properties described below.

The method according to the first aspect may advantageously be implemented by at least one apparatus provided in the context of a logistics system (an example of a system according to the second aspect) for processing shipments and/or consignments (generally referred to herein as consignments). For example, consignments may be provided in form of letters, parcels, packages, or even containers such as Unit Load Devices (ULDs) or the like, which are to be understood as non-limiting examples of consignment units as referred to herein. In an exemplary embodiment, said at least one apparatus comprises the at least one apparatus according to the first aspect, the at least one apparatus according to the first aspect e.g. corresponding to one or more processors, or the at least one apparatus corresponding to or being comprised by the at least one apparatus according to the first aspect The at least one apparatus may be provided in the backend of the logistics system and/or at and/or in communication with at least one node of the logistics system. In an exemplary embodiment, the at least one node of a logistics system comprises a mail distribution center, a shipping center, a transshipment center, a parcel center, a sorting center, a warehouse, and/or a fulfillment center. It is noted that while the at least one apparatus may correspond to an entity such as a server, a server system or cloud system, the at least one apparatus may correspond to a system of two or more entities (e.g. stand-alone devices) e.g. distributed over nodes of the logistics system where respective one or more entities perform individual steps or groups of steps of the method according to the first aspect As used herein, consignment units may be subjected to logistics processing which is to be understood in the context of the present disclosure as comprising for example a process of delivering a consignment unit from a sender to a recipient and/or any one or more substeps that may be involved in such process such as e.g. processes involved in an initial or intermediate inspection of a consignment unit, temporarily storing a consignment unit in a warehouse, transporting a consignment unit from a node of the logistics system to another node (outside of inside of the system), transport processes using dedicated transport vehicles (such as trucks, ships, airplanes, UGVs (e.g. robots) or UAVs (e.g. drones)), etc.

Generally, upon processing of a consignment unit e.g. in one of the nodes of the logistics system, attribute information relating to the consignment unit is obtained and at least temporarily stored in a database of the logistics system. For example, after a sender has initially handed a consignment unit over to a postal service, the consignment unit may be subjected to an initial inspection where on the one hand label information (sender address, recipient address, etc.) may be obtained e.g. from a label attached to the consignment unit and where on the other hand physical information of the consignment units such as weight, size, geometrical shape of the consignment unit is obtained. Further, upon such initial (or routine) inspection, image information may be obtained by taking photographic images from at least one face (in an exemplary embodiment from three, five or six faces) of the consignment unit. Thus, in an exemplary embodiment, the attribute information comprises label information, physical information and/or image information relating to a consignment unit.

The obtained attribute information is at least temporarily stored in a database of the logistics system to be at least temporarily available to at least the nodes that take part in processing the consignment unit such that the consignment unit can then be processed based on the attribute information. For example, the label information in particular comprising an address of a recipient of the consignment unit allows the assignment unit to be processed by corresponding nodes to enable delivery of the consignment unit to the recipient. Label information may be provided as printed information on a label attached to or printed on an outer surface of the consignment unit, the printed information comprising written text that may be computer readable and/or at least one one or two dimensional bar code. The physical information relating to the consignment unit, e.g. weight, size, and/or geometrical shape of the consignment unit may be useful to facilitate processing of the consignment unit, e.g. for determining an appropriate transport means and/or for determining an appropriate temporal storage location e.g. in a logistics warehouse.

While attribute information may on the one hand thus be useful for facilitating logistics processes in general, in the context of the present disclosure, attribute information related to the consignment unit advantageously enables identifying and/or determining shipments or consignments as potentially containing particular content. Thereby, in an exemplary embodiment, particular content comprises explosive substances, flammable substances and/or substances harmful for human health, and/or illegal goods such as illegal weapons, illegal drugs, etc. A consignment unit identified as potentially containing particular content is further referred to herein as candidate consignment unit.

The described attribute information may advantageously facilitate identifying such candidate consignment units. Namely, if a person or a group of persons produces a series of two or more consignment units containing illegal substances, e.g. a series of two or more parcel bombs or parcels containing substances harmful for human health, it can be assumed that the consignment units are similar in at least part of their attributes. For example, it can be assumed that for example similar parcels of similar size and geometrical shape are used. As it can be assumed that in case of a series of parcel bombs, a similar type of bomb is used, it can be assumed that corresponding consignment units have a similar weight. Further attributes may be similar as it can for example be assumed that a person producing a series of two or more parcel bombs is likely to use adhesive tape for closing the parcels that is from a same type or even from a same role of adhesive tape. Yet further, it can be assumed that a same printer is used for printing labels such that printing errors such as printing imperfections on a microscale or micro damages caused on a printed surface by a printer, which both are unique to a particular printer, can be assumed to be similar for the two or more parcels used for delivering the parcel bomb.

Given that in a majority of parcel bomb attacks, more than one parcel bomb is delivered, the described concept underlying the method according to the first aspect of the present disclosure may advantageously provide a highly efficient way of finding, i.e. identifying and/or determining shipments or consignments likely to contain particular content based on similarity in at least part of attributes of a certain consignment unit with a consignment unit that has been determined to contain such particular content Based on this concept, for example following an attack with a (first) parcel bomb, the method according to the first aspect advantageously allows for identifying candidate consignment units using the database of the logistics system in a very fast and efficient manner. Found candidate consignment units can in this way quickly be provided to further inspection using dedicated sensor equipment which may help to minimize a risk of further attacks. It is noted that while this concept is applicable in particular to consignment units containing explosive substances (parcel bombs), the concept may similarly be applied more generally to consignment units containing particular content. For example, if a routine inspection of a consignment unit in one of the nodes of the logistics system, e.g. using the consignment unit examination apparatus described above, yields that the consignment unit contains e.g. illegal content such as illegally shipped weapons or drugs, the method according to the first aspect may be employed for identifying candidate consignment units based on the routinely inspected consignment unit that are also (simultaneously or later) processed by the logistics system. Such candidate consignment units can then be quickly identified and provided to further inspection by dedicated sensor equipment.

As mentioned, the method according to the first aspect comprises a step of obtaining trigger information associated with at least part of attribute information (the at least part of attribute information being) associated with at least one first consignment unit (e.g. attribute information of at least one first consignment unit and/or attribute information stored in association with the at least one first consignment unit in the database).

Thereby, trigger information is to be understood as information configured to cause the apparatus according to the first aspect to perform the steps of the method according to the first aspect The trigger information is in an exemplary embodiment obtained by receiving the trigger information via a wired and/or wireless network connection (e.g. via an internet connection) from an external apparatus. The trigger information is in an exemplary embodiment obtained at the at least one first apparatus by receiving the trigger information based on and/or included in a data message.

For example, in an exemplary embodiment, the trigger information may be received via a wired and/or wireless network connection directly (e.g. automatically) or indirectly (e.g. after a corresponding transmission is initiated and/or authorized by an operator) from a consignment unit examination apparatus for examining shipments or consignments, for example as disclosed in EP 3 537 133 A1. Such apparatus may be installed at one or more of the nodes of the logistics system for performing an examination of consignment units inspected at the respective node. In an exemplary embodiment, the trigger information may be obtained in response to and/or after a determination by the consignment unit examination apparatus that the at least one first consignment unit is used for carrying particular content such as explosive material.

Alternatively or in addition, in an exemplary embodiment, the trigger information may be obtained from an external apparatus that corresponds to a personal computer provided at a node of the logistics system and used by an operator to transmit trigger information to the at least one apparatus after e.g. a consignment unit examination apparatus provided at the node of the logistics system has determined that the at least one first consignment unit is used for carrying illegal content such as explosive material. Alternatively or in addition, in an exemplary embodiment, the trigger information may be obtained by the at least one apparatus via direct input e.g. as a result of an operator using an input means such as a physical or virtual keyboard connected to the at least one apparatus.

Alternatively or in addition, in an exemplary embodiment, the trigger information may be obtained after and/or in response to the at least one first consignment unit being determined as having been used to carry illegal content, e.g. after a mail bomb has exploded. For example, an operator of a company responsible for the logistics system may be informed e.g. by police and/or by media of an event such as an explosion of a bomb carried by a consignment unit delivered by the logistics system. In such situation, the operator may use e.g. a personal computer and/or a mobile device such as a smart phone to transmit trigger information to the at least one apparatus.

In an exemplary embodiment, the trigger information is obtained after and/or in response to the at least one first consignment unit being determined as being or having been used to carry particular content. In an exemplary embodiment, the trigger information is obtained by receiving the trigger information from an external apparatus, e.g. from a consignment unit examination apparatus, from a mobile device and/or from a personal computer, via a wireless and/or wired network connection and/or via direct input.

According to the first aspect, the trigger information is obtained at the at least one first apparatus, the trigger information being associated with at least part of attribute information associated with the consignment unit. In other words, in an exemplary embodiment, trigger information is obtained by receiving the trigger information in combination (e.g. in a common data message and/or in mutually associated data messages) with at least part of attribute information of the at least one consignment unit. For example, the trigger information may be received in combination with attribute information representative of physical attributes of the at least one consignment unit such as weight, size, geometrical shape, material of the consignment unit and/or a material of a sealing element (e.g. tape) used for closing and/or sealing the consignment unit. The trigger information may be received in combination with further attribute information including information derivable from a consignment unit and/or from a label of the consignment unit. It is noted that even a consignment unit has been used for delivering particular content, e.g. even after a consignment unit used for carrying a parcel bomb has exploded, attribute information relating to the consignment unit may be derivable from the database of the logistics based on the recipient information (where the parcel bomb may have exploded), potentially in combination with further attribute information which may still be derivable from the particular consignment unit.

The method according to the first aspect further comprises determining whether or not attribute information associated with at least one second consignment unit (e.g. attribute information of at least one second consignment unit and/or attribute information stored in association with at least one second consignment unit in the database) is stored in a database that is similar to the attribute information associated with the at least one first consignment unit. Thereby, in an exemplary embodiment, the at least one first apparatus is connected to the database via a wired and/or wireless network connection. Further, in an exemplary embodiment, said determining may be understood as being performed by the at least one apparatus using a database directly connected to the at least one apparatus via a wireless and/or wired network connection, the database being directly accessible and/or manageable by the at least one first apparatus. Alternatively or in addition, said determining may be understood as being performed by the at least one apparatus by communicating via a wireless and/or wired network connection with an external apparatus (e.g. an external personal computer and/or an external network server) that manages a database directly connected to the external apparatus.

Further according to the first aspect, if attribute information associated with at least one second consignment unit is determined to be stored in the database that is similar to the attribute information associated with the at least one first consignment unit, the method according to the first aspect comprises generating alert information or causing alert information to be generated.

Thereby, when thus at least one second consignment unit is found, attribute information of which is similar to attribute information of the at least one first consignment unit, this at least one second consignment unit corresponds to a candidate consignment unit as described above and is thus likely to contain particular content such as explosive and/or harmful substances and/or illegal goods such as weapons, drugs or the like. Once such candidate consignment unit is identified, such consignment unit can then be further examined e.g. using dedicated sensor equipment.

To this end, in an exemplary the alert information is information to be provided by the at least one apparatus for causing an apparatus (at least one of the at least one apparatus and/or at least one external apparatus) to perform an action for causing a logistics processing of the at least one second consignment unit (at least one candidate consignment unit) to be interrupted. In other words, in an exemplary embodiment, the method comprises a step of providing or causing of providing the alert information to cause an apparatus (at least one of the at least one apparatus and/or at least one external apparatus) to perform an action for causing a logistics processing of the at least one second consignment unit to be interrupted.

In an exemplary embodiment, the at least one apparatus caused to perform an action (an example of the at least one second apparatus described further herein) is an apparatus provided at at least one node of the logistics system. For example, in an exemplary embodiment, the at least one apparatus caused to perform an action corresponds to a computer that may be stand-alone or that may be connected to or that may be integrated with an apparatus such as a sorting machine, said consignment unit examination apparatus, a drone (e.g. an unmanned aerial vehicle, UAV) and/or robot (e.g. an unmanned ground vehicle, UGV) e.g. used for transporting consignment units in a node of the logistics system, and/or a control apparatus of a conveyor belt. For example, in an exemplary embodiment, a robot comprises a robot with at least one embedded camera, a sorting robot, a collaborative robot, a shuttle robot, and/or a picking robot Further, in an exemplary embodiment, the at least one apparatus caused to perform an action corresponds to a mobile device (e.g. a smartphone, a smart watch or smart band, a tablet or laptop computer). Such mobile device may correspond e.g. to a smartphone of an operator by means of which e.g. an alert can be displayed to inform an operator that a candidate consignment unit has been found. The operator may be a person in charge in a node of the logistics system and/or a person controlling a transport vehicle (e.g. a transport truck) used for transporting consignment units. Thus, in an exemplary embodiment, the apparatus caused to perform an action corresponds to a transport vehicle (e.g. a transport truck) configured to display (e.g. using a display provided inside of the truck) an alert based on the alert information. In addition or alternatively, in an exemplary embodiment, a recipient of the at least one second consignment unit may be informed based on the generated alert information, e.g. via an e-mail which may be automatically generated by the at least one apparatus according to the first aspect based on the generated alert information.

In other words, in an exemplary embodiment, the at least one apparatus caused to perform an action (which in an exemplary embodiment corresponds to or comprises one or more processors and/or a stand-alone computer) corresponds to or is integrated in at least one of
- a stand-alone computer;
- a mobile device;
- an apparatus installed at a node of a logistics system, in particular in a mail distribution center, a shipping center, a transshipment center, a parcel center, a sorting center, a warehouse, and/or a fulfillment center;
- a consignment unit sorting machine and/or a consignment unit examination apparatus;
- a transport vehicle for transporting consignment units;
- an unmanned aerial vehicle, UAV;
- an unmanned ground vehicle, UGV;
- a robot, e.g. a robot with at least one embedded camera, a sorting robot, a collaborative robot, a shuttle robot, and/or a picking robot;
- a control apparatus of a conveyor belt.

In an exemplary embodiment, the method according to the first aspect further comprises providing or causing of providing the alert information to cause an apparatus to perform at least one of the following actions, wherein in an exemplary embodiment each of these actions correspond to an action for causing a logistics processing of the at least one second consignment unit to be interrupted:
- causing an alert and/or identification information of the at least one second consignment unit to be displayed based on the generated alert information;
- causing a logistics process in relation to the at least one second consignment unit to be interrupted based on the generated alert information;
- causing the at least one second consignment unit to be mechanically discharged from a conveyor belt transporting the at least one second consignment unit based on the generated alert information;
- causing a recipient of the at least one second consignment unit to be informed based on the generated alert information.

Thereby, in an exemplary embodiment, causing identification information of the at least one second consignment unit to be displayed based on the generated alert information in an exemplary embodiment comprises displaying the identification information on a display device comprised by and/or connected to the at least one apparatus caused to perform an action. In this way, an operator may e.g. be informed that a particular consignment unit is a candidate consignment unit and can then undertake further actions e.g. such that the candidate consignment unit is taken out of normal logistics processing and is provided for further inspection e.g. using dedicated sensor equipment.

Further, in an exemplary embodiment, causing a logistics process in relation to the at least one second consignment unit to be interrupted based on the generated alert information comprises (e.g. automatically) interrupting a transport process of the at least one second consignment unit (e.g. via a conveyor belt, using an unmanned or manned transport vehicle) or a pickup of the at least one second consignment unit at a node of the logistics system (such as a warehouse where the at least one second consignment unit is temporarily stored) is prevented and/or interrupted. For example, a transport process inside a node of the logistics system may be interrupted by interrupting transport of the at least one second consignment unit by a conveyor belt or using an indoor unmanned or manned transport vehicle. A transport process may further be interrupted outside of a node of a logistics system, e.g. by informing a truck driver to stop transporting the at least one second consignment unit.

As explained above, the at least one second consignment unit is (the at least one candidate consignment unit) determined to be present in the database based on a similarity of attribute information associated with the at least one second consignment unit with at least part of attribute information associated with the at least one first consignment unit. Thereby, it is noted that in an exemplary embodiment, at least the attribute information associated with the at least one consignment unit and the attribute information associated with the at least one second consignment unit is stored in the database to be accessible by the at least one apparatus according to the first aspect To determine said similarity, the at least one apparatus according to the first aspect is in an exemplary embodiment configured to obtain the attribute information associated with the at least one first consignment unit and the attribute information associated with the at least one second consignment unit from the database and to compare the attribute information associated with the at least one first consignment unit with the attribute information associated with the at least one second consignment unit

In other words, in an exemplary embodiment, the method further comprises:
- obtaining or causing obtaining the attribute information associated with the at least one first consignment unit and the attribute information associated with the at least one second consignment unit from the database; and
- comparing or causing comparing the attribute information associated with the at least one first consignment unit with the attribute information associated with the at least one second consignment unit

Thereby, the at least one first apparatus may obtain in particular the attribute information associated with the at least one first consignment unit from the database based on the obtained trigger information. In other words, in an exemplary embodiment, the method comprises:
- obtaining or causing obtaining the attribute information associated with the at least one first consignment unit from the database based on the obtained trigger information.

For example, if label information such as a shipment number (an example of identification information of the consignment unit) of the at least one first consignment unit is available, the at least one first apparatus may obtain attribute information stored in the database in association with the shipment number from the database. Further, the trigger information may comprise information representative of one or more images obtained from one or more faces of the at least one first consignment unit (e.g. provided by police in case of a parcel bomb if one or more faces are still available or by a consignment unit examination apparatus in case the at least one first consignment unit has been found upon initial, intermediate or routine inspection). In this case, the at least one first apparatus may derive further information from the one or more images e.g. employing a same image recognition algorithm (as described further herein) as would be applied in case of an initial, intermediate or routine inspection of consignment units or may apply a same artificial intelligence based algorithm (as described further herein) as would be applied in case of such inspection to derive further image information based on which the at least one first apparatus may search the database for attribute information associated with the at least one first consignment unit and stored in the database. Based on attribute information associated with the at least one first consignment unit found in the database based on the trigger information, the at least one first apparatus may then further search database for attribute information associated with any further consignment unit (candidate consignment unit) the attribute information of which is similar to the attribute information associated with the at least one first consignment unit.

As mentioned above, the attribute information comprises in an exemplary embodiment image information. The image information may be obtained based on photographic images obtained from at least one face of a consignment unit in an initial inspection process using one or more cameras provided at a corresponding device e.g. provided at a corresponding node of the logistics system. Said device may further be configured to store corresponding information in the database of the logistics system. Thereby, either the information derived from the at least one image and/or the at least one image (data representative of the at least one image) may be stored in the database to be accessible by the at least one apparatus according to the first aspect Similarly, also further items of attribute information (e.g. said label information and/or said physical information) may similarly be stored in the database. In other words, in an exemplary embodiment, the method comprises obtaining attribute information associated with the at least one first consignment unit and/or attribute information associated with the at least one second consignment unit from the database.

As explained, according to the first aspect, alert information is generated if it is determined that attribute associated with at least one second consignment unit is stored in the database that is similar to the attribute information associated with the at least one first consignment unit. In an exemplary embodiment, the method according to the first aspect, in particular the step of determining whether or not attribute information associated with at least one second consignment unit is stored in a database that is similar to the attribute information associated with the at least one first consignment unit, further comprises determining or causing determining whether or not attribute information stored in the database and associated with at least one second consignment unit is similar to the attribute information associated with the at least one first consignment unit.

This determination may in an exemplary embodiment correspond to a comparison between a value representative of a similarity between the respective attribute information. In other words, it may this be determined if attribute information of two consignment units have for example 95% similarity. A corresponding threshold may be set e.g. based on experiments to 90% such that in this case the attribute information of the two consignment units would be determined to be similar. The corresponding second consignment unit would then correspond to a candidate consignment unit.

In order to enable such threshold comparison, in an exemplary embodiment attribute information may be represented in form of numerical values, where a numerical value may represent a respective attribute such as weight, size, geometrical shape, material of the consignment unit, material and/or a dimension of a sealing element used for closing and/or sealing the consignment unit. As mentioned, respective one or more thresholds may be defined e.g. by experiments that allow consignment units to be appropriately compared. Said value representative of a similarity between the respective attribute information may in an exemplary embodiment equivalently be expressed as a difference between respective numerical values representative of corresponding items of attribute information.

Thus, in an exemplary embodiment, the method further comprises:
- determining or causing determining whether or not attribute information stored in the database and associated with at least one second consignment unit is similar to the attribute information associated with the at least one first consignment unit, wherein attribute information stored in the database and associated with at least one second consignment unit is determined to be similar to the attribute information associated with the at least one first consignment unit if at least one of the criteria are met:
   - a value representative of a similarity between the attribute information stored in the database and associated with at least one second consignment unit and attribute information associated with the at least one first consignment unit is equal to or above a predefined threshold;
   - a difference between at least one first parameter representative of attribute information associated with the at least one first consignment unit and at least one second parameter representative of attribute information associated with the at least one second consignment unit is equal to or below a corresponding at least one predetermined threshold.

Thereby, a respective threshold may be defined for each item of attribute information (e.g. a threshold may be defined for a weight of the consignment unit, a threshold may be defined for a size of the consignment unit, etc.), whereby suitable thresholds may be determined experimentally. A suitable weighting between respective items of attribute information may then enable combining threshold comparisons of several items of attribute information to determine a similarity between attribute information of two consignment units. Again, a suitable weighting can be determined experimentally.

Determining a similarity in this way may be particularly advantageous for comparing physical attribute parameters that are not or not easily derivable from images of a consignment unit, e.g. weight, size, a certain class of the consignment unit, information such as numerical information derived from a label of the consignment unit, etc. For example, in an exemplary embodiment, attribute information of a consignment unit comprises at least:
- information representative of a weight of the consignment unit;
- information representative of a size of the consignment unit;
- information representative of a geometrical shape of the consignment unit;
- information representative of a material of the consignment unit;
- information representative of a material, a type, and/or a dimension of a sealing element used for closing and/or sealing the consignment unit;
- information of a class of the consignment unit;
- physical information derived from a label of the consignment unit;
wherein each of these information items may be understood as an exemplary item of attribute information as referred to herein. In particular, these items of attribute information are further referred to herein as items of physical attribute information.

Further, in an exemplary embodiment, attribute information associated with a consignment unit (e.g. with the at least one first consignment unit and/or with the at least one second consignment unit) comprises information derived from at least one image taken (with at least one camera) from at least one surface of the consignment unit Thereby, either the information derived from the at least one image and/or (information representative of) the at least one image is in an exemplary embodiment stored in the database (as at least part of the attribute information associated with the at least one first and the at least one second consignment unit) to be accessible by the at least one apparatus according to the first aspect.

Thereby, in an exemplary embodiment, attribute information of a consignment unit comprises at least image information (a further example of an item of attribute information) obtained via an image recognition algorithm based on at least one (photographic) image taken of at least one corresponding face of the consignment unit. In this way, for example logos, stamps or characteristic visual features such as patterns and/or color shapes used e.g. on a surface of a consignment unit can be recognized and compared. For example combining more than one image, the attribute information may further comprise object information (a further example of an item of attribute information) obtained via an object recognition algorithm based on at least two images taken of at least two corresponding faces of the consignment unit. In this way, it becomes possible to compare characteristic geometrical shapes of consignment units in determining the similarity.

In an exemplary embodiment, the attribute information comprises at least one image feature vector (a further example of an item of attribute information) representative of an image taken from at least one surface of the consignment unit. An example of a feature vector may e.g. correspond to (e.g. Red, Green, Blue, RGB) pixel intensities of an image. A further example of a feature vector may correspond to representative pixel intensities of an image, where each value is a (e.g. flattened) value representing respective RGB values thus yielding a one dimensional matrix rather than a three dimensional matrix. Further examples of feature vectors may be obtained e.g. by employing statistical functions to the respective RGB values and/or channels of an image.

Further, in an exemplary embodiment, the attribute information of a consignment unit comprises at least information unique to a printer used for printing of a label of the consignment unit and derived from the consignment unit (a further example of an item of attribute information). As mentioned above, features printed on a surface e.g. of a consignment unit usually include imperfections (usually on a below mm or µm scale) that are unique to the printer used. Further, a printer may leave damages (similarly usually on below mm or a µm scale) that are unique to the printer. Thus, both the imperfections and the damages may serve as a "fingerprint" of the used printer and are thus advantageously employable as attribute information in the context of the present disclosure offering the possibility to employ a similarity analysis for comparing two consignment units.

Similar as in the case of the physical parameters described above, also the information derived from the at least one image and/or the information unique to a printer may be represented by one or more numerical values that may be used for a threshold comparison to determine a respective similarity as described above.

As mentioned, label information related to the consignment unit may be understood to be a further example of an item of attribute information as used herein. Label information may generally correspond to information necessary and/or useful for identifying the consignment unit, its properties and/or requirements, its shipping source and/or its shipping destination. In an exemplary embodiment, the label information being associated with the label is to be understood such that the label information is comprised by the label in form of written text (e.g. to be read by a corresponding apparatus via optical character recognition, OCR), and/or in form of a machine-readable, visual representation, such as in form of a one-dimensional barcode, and/or a two-dimensional bar code, such as a matrix code, e.g. a QR code, and/or as information to be read-out by a read-out device based on electromagnetic signals, electric fields or magnetic fields. For instance, in the latter case, the label may be or may comprise a Radio Frequency Identification (RFID) or Near Field Communication (NFC) label holding available at least part of the label information to be read-out using an RFID sensor or an NFC sensor. Thus, in an exemplary embodiment, the label information comprises a machine-readable visual representation of at least part of the label information and/or a Radio Frequency Identification (RFID) or Near Field Communication (NFC) label holding available at least part of the label information.

In an exemplary embodiment, the label information comprises at least one of the following:
- identification information of the consignment unit (e.g. a shipment number);
- position information identifying a position of the consignment unit in a warehouse;
- shipping information, e.g. sender information (including the sender address), and/or recipient information (including the recipient address);
- delivery-related information (e.g. priority information, e.g. indicating whether the consignment unit shall be delivered with higher or lower priority);
- delivery-due information (e.g. indicating when the consignment unit shall be preferably delivered to the recipient or when the consignment unit shall be delivered to the recipient at the latest);
- storing information (e.g. pertaining to a temperature, humidity, and/or environmental gas/air composition required by the consignment unit);
- fragility information (e.g. indicating if the consignment unit is fragile or otherwise susceptible to damage if not handled with caution).

Such items of label information may similarly be used by the at least one apparatus according to the first aspect to determine a similarity between two consignment units. For example, two or more of items of label information may be compared for two consignment units and a score may be defined based on respective weights of the items of label information, whereby the score may be used for a threshold comparison as described above.

While the described attribute information may be used to determine similarity between two consignment units based on the described threshold comparison, at least for some of the described examples of attribute information, alternatively or in addition, a similarity analysis may be performed using an artificial intelligence based and/or deep learning and/or machine learning based algorithm.

In an exemplary embodiment, the artificial intelligence based and/or deep learning and/or machine learning based algorithm is trained based on pairs of items of attribute information (e.g. pairs of image feature vectors), wherein each item of attribute information corresponds to a respective consignment unit, and wherein each pair of items of attribute information is selected and/or provided to correspond to a predetermined level of similarity. Such level may for example correspond to "similar" or "not similar" or may correspond for example to a more finely graded probability of two consignment units being similar.

In an exemplary embodiment, the artificial intelligence based and/or deep learning and/or machine learning based algorithm employs a semantic similarity function. The semantic similarity function is in an exemplary embodiment a metric defined for single items of attribute information or over a set of items of attribute information of consignment units. In this way, respective (virtual) distances can be defined e.g. between items of attribute information or between sets of items of attribute information based on the likeness of the respective attributes.

In an exemplary embodiment, the artificial intelligence based and/or deep learning and/or machine learning based algorithm is configured to output information indicative of a level of similarity between the at least one first and the at least one second consignment unit and/or information indicative of the at least one consignment unit to be similar to the at least one second consignment unit or not. The artificial intelligence based and/or deep learning and/or machine learning based algorithm is in an exemplary embodiment thus configured to measure a similarity between two consignment units such that use of the artificial intelligence based and/or deep learning and/or machine learning based algorithm advantageously enables outputting a list of one or more candidate consignment units to an operator of the system.

To this end, in an exemplary embodiment, a loss function of the artificial intelligence based and/or deep learning and/or machine learning based algorithm is provided so that the artificial intelligence based and/or deep learning and/or machine learning based algorithm can be trained to maximize a distance between dissimilar pairs and to minimize a distance between similar pairs. In this way, using such loss function advantageously enables training the network so that similar images have similar representations in the corresponding mathematical space, and dissimilar images are far from each other. It thereby becomes possible to enable the artificial intelligence based and/or deep learning and/or machine learning based algorithm is provided so that the artificial intelligence based and/or deep learning and/or machine learning based algorithm to learn to measure if two incoming images are from a similar consignment unit or not.

For example, in a training phase, incoming pairs of images may be labeled to be either similar or not Based on this information, the loss function is configured to guide the backpropagation process based on the spatial distances of the inputted images.

In an exemplary embodiment, the method thus further comprises:
- determining or causing determining whether attribute information stored in the database associated with at least one second consignment unit is similar to the attribute information associated with the at least one first consignment unit using an artificial intelligence based and/or deep learning and/or machine learning based algorithm configured to compare at least part of attribute information associated with the at least one first consignment unit to attribute information associated with the at least one second consignment unit.

In an exemplary embodiment, the artificial intelligence based and/or deep learning and/or machine learning based algorithm corresponds to or comprises a Siamese Neural Network. Thus, in an exemplary embodiment, the artificial intelligence based and/or deep learning and/or machine learning based algorithm comprises two identical neural networks. Thereby, in an exemplary embodiment, the method comprises a step of updating the identical neural networks jointly, wherein either a contrastive loss or a triplet loss is employed. It turned out that in particular use of a Siamese Neural Network enables an efficient and precise comparison of attribute information of consignment units.

In an exemplary embodiment, items of attribute information like weight and size can be used in a pre-elimination process before feeding images to the artificial intelligence based and/or deep learning and/or machine learning based algorithm. For example, if a second consignment unit differs in weight or size from the at least one first consignment unit by more than a predetermined threshold, this second consignment unit can be ruled out as a candidate consignment unit To the contrary, if for the at least one second consignment unit a difference in weight or size from the weight or size of the at least one first consignment unit is less than the predetermined value, images of at least one face of this second consignment unit can be inputted into the artificial intelligence based and/or deep learning and/or machine learning based algorithm.

It is noted that in particular information representative of a material, a type, and/or a dimension of a sealing element used for closing and/or sealing the consignment unit, e.g. of tape used for closing the consignment unit turned out to be an item of attribute information well suited to determine a consignment unit that is likely to contain particular content based on a consignment unit found to contain particular content. As mentioned, if a person or a group of persons prepares consignment units containing particular content, in particular parcel bombs, it can be assumed that such person or group will use e.g. adhesive tape of a same or at least very similar kind - potentially of a same role of tape. Similar as weight and/or size, in particular such information representative of a material, a type, and/or a dimension of a sealing element used for closing and/or sealing the consignment unit turned out to be an item suitable to be used in said pre-elimination process before feeding images to the artificial intelligence based and/or deep learning and/or machine learning based algorithm. It is noted that in addition or alternatively, when at least one image taken from at least one face of a consignment unit includes an image of at least part of such sealing element, such image may in addition or alternatively be used by the artificial intelligence based and/or deep learning and/or machine learning based algorithm for determining similarity based thereon.

Thus, in an exemplary embodiment, wherein the determining whether or not attribute information associated with at least one second consignment unit is stored in a database that is similar to the attribute information associated with the at least one first consignment unit comprises:
- determining or causing determining whether or not a difference between at least one first physical parameter representative of attribute information associated with the at least one first consignment unit and at least one second physical parameter representative of attribute information associated with the at least one second consignment unit is equal to or below a corresponding at least one predetermined threshold; and
- if it is determined that the attribute information stored in the database associated with at least one second consignment unit is similar to the attribute information associated with the at least one first consignment unit based on the compared first and second physical parameters:
   - determining or causing determining whether information derived from at least one image obtained from at least one corresponding face of the at least one second consignment unit and/or label information derived from the at least one second consignment unit and/or information unique to a printer used for printing a label of the at least one second consignment unit stored in the database is similar to information derived from at least one image obtained from at least one corresponding face of the at least one first consignment unit and/or label information derived from the at least one first consignment unit and/or information unique to a printer used for printing a label of the at least one first consignment unit using the artificial intelligence based and/or deep learning and/or machine learning based algorithm.

Thereby, in an exemplary embodiment, the artificial intelligence based and/or deep learning and/or machine learning based algorithm is configured to compare the information derived from at least one image obtained from at least one corresponding face of the at least one second consignment unit to the information derived from at least one image obtained from at least one corresponding face of the at least one first consignment unit and/or to compare the label information derived from the at least one second consignment unit to the label information derived from the at least one first consignment unit and/or to compare the information unique to a printer used for printing a label of the at least one second consignment unit to the information unique to a printer used for printing a label of the at least one first consignment unit.

Thereby, in an exemplary embodiment, the first physical parameter and the second physical parameter are respectively representative of at least one of
- information representative of a weight of the consignment unit;
- information representative of a size of the consignment unit;
- information representative of a geometrical shape of the consignment unit;
- information representative of a material of the consignment unit;
- information representative of a material and/or a dimension of a sealing element used for closing and/or sealing the consignment unit;
- information of a class of the consignment unit;
- physical information derived from a label of the consignment unit.

In other words, a two-step algorithm is provided according to these exemplary embodiments which employs a first step according to which physical parameters that are comparable in a fast and efficient manner such as weight, size or class are compared before consignment units that pass this first step are subjected to a more precise analysis using said artificial based algorithm. In particular in this way, it becomes possible to inspect a large number of consignment units being processed in a system of a logistics company for candidate consignment units that are similar to a consignment unit found to contain particular content in a fast but precise manner.

As mentioned, according to a second aspect of the present disclosure, a system is provided comprising at least one of the at least one first apparatus configured to perform at least the method according to the first aspect, and at least one second apparatus. As mentioned, in an exemplary embodiment, the at least one second apparatus corresponds to or is comprised by at least one of a stand-alone computer; a mobile device; an apparatus installed at a node of a logistics system; a consignment unit sorting machine and/or a consignment unit examination apparatus; a transport vehicle for transporting consignment units; an unmanned aerial vehicle, UAV; an unmanned ground vehicle, UGV; a control apparatus of a conveyor belt.

According to the second aspect, the at least one second apparatus is configured to perform a method comprising in particular a step of obtaining or causing of obtaining the alert information from the at least one first apparatus. Thereby, in an exemplary embodiment, the at least one second apparatus obtains the alert information from the at least one first apparatus via a wireless and/or a wired network connection.

Based on the alert information, the at least one second apparatus is then configured to perform at least one of:
- displaying or causing of displaying an alert based on the alert information;
- interrupting or causing interrupting a logistics processing of the at least one second consignment unit based on the alert information.

In an exemplary embodiment, the at least one second apparatus corresponds to or is comprised by the at least one apparatus caused to perform an action (by the at least one first apparatus) as disclosed further herein.

In an exemplary embodiment, the system according to the second aspect further comprises at least one third apparatus configured to perform a method comprising:
- obtaining or causing of obtaining attribute information relating to at least one consignment unit;
- storing or causing of storing the attribute information in the database.

The at least one third apparatus may for example correspond to or be comprised by a device provided at at least on of said nodes of the logistics system being used for said initial inspection of a consignment unit after being handed over to a postal service to be subjected to a logistics processing (e.g. for being delivered to a recipient). To this end, in an exemplary embodiment, the at least one third apparatus comprises or is connected to at least one sensor configured to obtain information representative of a weight of the at least one consignment unit and/or comprises or is connected to at least one camera arranged for and being configured to obtain at least one (photographic) image of at least one corresponding face of the at least one consignment unit

In an exemplary embodiment, the at least one third apparatus is directly or indirectly connected to the database, e.g. via a wired and/or wireless network connection and is configured for storing obtained attribute information (the attribute information) in the database. Being indirectly connected to the database may for example be understood such that the at least one third apparatus is connected to the database via the at least one first apparatus which may (at least in this respect) correspond to, be comprised by or comprise a control apparatus directly and/or indirectly connected to the database via a wired and/or wireless network connection. In this latter case, the at least one third apparatus may in an exemplary embodiment cause storing of the obtained attribute information by providing the obtained attribute information to the at least one first apparatus for storing the attribute information in the database.

It is to be understood that the presentation of the present disclosure in this section is merely by way of examples and non-limiting.

Other features of the present disclosure will become apparent from the following detailed description considered in conjunction with the accompanying figures. It is to be understood, however, that the figures are designed solely for purposes of illustration and not as a definition of the limits of the present disclosure, for which reference should be made to the appended claims. It should be further understood that the figures are not drawn to scale and that they are merely intended to conceptually illustrate the structures and procedures described herein.

### BRIEF DESCRIPTION OF THE FIGURES

- Fig. 1: Fig. 1 shows an exemplary consignment unit examination apparatus;
- Fig. 2: Fig. 2 is a schematic high-level block diagram of an exemplary logistics system;
- Fig. 3: Fig. 3 is a flow chart illustrating a method that may be performed by a control apparatus according to an exemplary embodiment;
- Fig. 4: Fig. 4 illustrates exemplary processing performed by a logistics system in reaction to a determination that a consignment unit has been determined to contain particular content;
- Fig. 5: Fig. 5 illustrates an exemplary method in accordance with the first aspect of the present disclosure;
- Fig. 6: Fig. 6 is a block diagram of an exemplary embodiment of a first apparatus according to an aspect of the present disclosure; and
- Fig. 7: Fig. 7 is a block diagram of an exemplary embodiment of a second apparatus according to an embodiment of the present disclosure.

### DETAILED DESCRIPTION

The following description serves to deepen the understanding of the present disclosure and shall be understood to complement and be read together with the description of example embodiments of the present disclosure as provided in the above SUMMARY section of this specification.

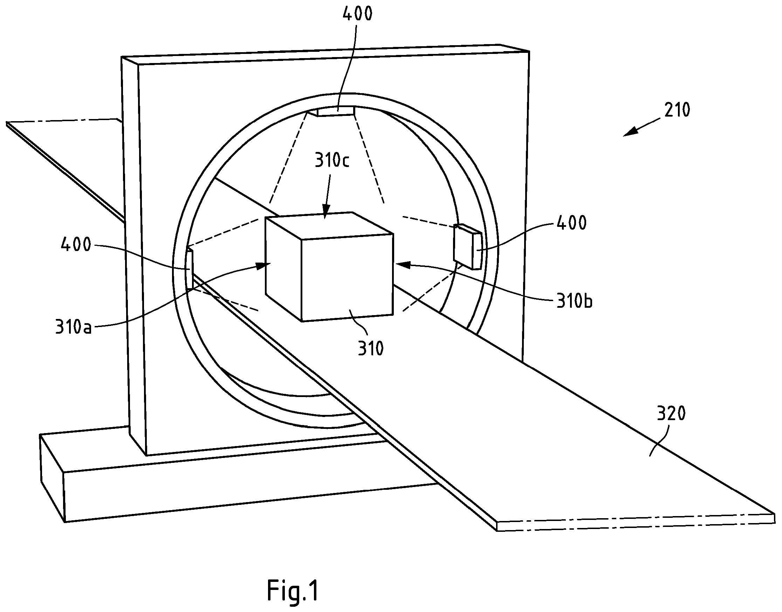

Fig. 1 schematically shows an exemplary consignment unit examination apparatus 210 (an exemplary second and/or third apparatus of an exemplary logistics system 1000 in accordance with an embodiment of the present disclosure). As shown, apparatus 210 is arranged at conveyor belt 320 used for transporting parcel 310 (an exemplary consignment unit) e.g. within a node of the logistics system 1000 e.g. during an initial stage of a process of providing parcel 310 from a sender to a recipient (an exemplary logistics process).

Apparatus 210 may be used for an initial inspection of parcel 310 and may acquire (obtain) images - in the shown exemplary case from three faces 310a, 310b, 310c - using respective cameras 400. It is noted that the shown example is not to be understood as limiting and that apparatus 210 may be configured to obtain images also from further faces of parcel 310 using cameras not visible in the figure and/or e.g. having an operator rotate the shown parcel 310 by 90 degrees rotating e.g. the face facing in the direction of movement into a direction facing the side such that in the shown configuration, images of five faces of parcel 310 may be obtained. A rotation by 90 or 180 degrees around an axis parallel to the direction of movement may enable taking an image also of the side that in the shown configuration faces the conveyor belt 320 such that it is possible that images of all six faces of the consignment unit may be obtained. Apparatus 210 may further be connected to one or more suitable sensors (e.g. provided at the conveyor belt 320) for obtaining a weight of parcel 320.

Apparatus 210 may further be configured for processing the obtained images to obtain further image information such as geometrical shape information of parcel 310 and/or label information from one or more labels provided at one or more surfaces of parcel 310. Apparatus 210 may still further be configured for employing an image recognition algorithm to one or more images or an object recognition algorithm as described further herein to obtain further image information. Similarly, apparatus 210 may be configured for obtaining feature vectors based on obtained images as further image information derived from the obtained images. Apparatus 210 is configured to directly or indirectly communicate with a database of system 1000 (not shown in the figure) via a suitable wireless or wired network connection for storing the obtained weight, the label information, the obtained images and/or said further image information derived from the obtained images in the database.

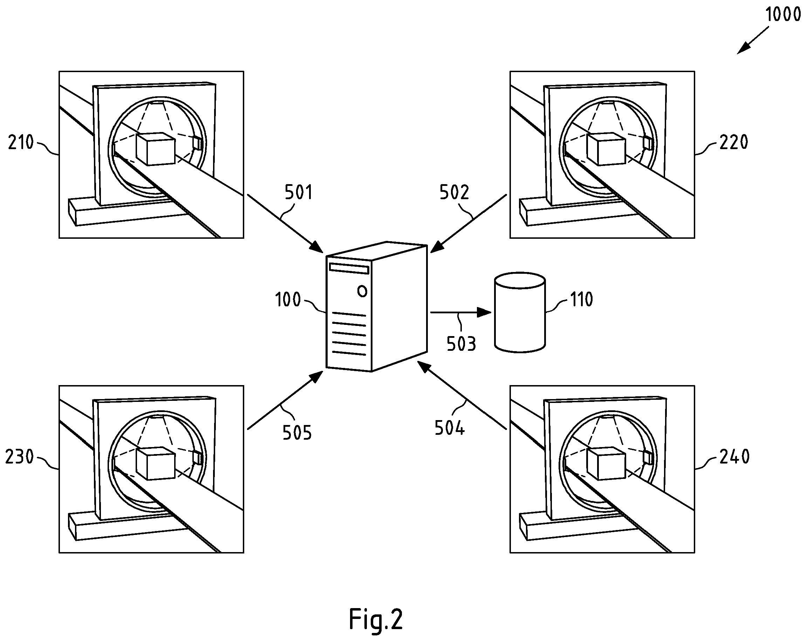

Fig. 2 is a schematic high-level block diagram of an exemplary logistics system 1000 according to the second aspect of the present disclosure. The logistics system comprises control apparatus 100 (an example of the at least one first apparatus) which may correspond to or comprise at least one stationary or portable personal computer, at least one server, at least one server system, at least one mobile device and/or one or more processors of the stationary or portable personal computer, the at least one server, the at least one server system and/or the at least one mobile device.

As explained further herein, logistics system 1000 may comprise nodes such as one or more mail distribution centers, one or more shipping centers, one or more transshipment centers, one or more parcel centers, one or more warehouses, one or more fulfillment centers, and/or one or more sorting centers (not shown in the figures) where the at least one first, the at least one second and/or the at least one third apparatuses may be provided. It is to be understood that logistics system 1000 is not limited in this respect and may comprise further nodes not explicitly mentioned. Control apparatus 100 may be connected (e.g. via a wired and/or wireless network connection) to apparatuses and devices provided in nodes of system 1000 that may be involved e.g. in logistics processing of parcel 310 shown in Fig. 1.

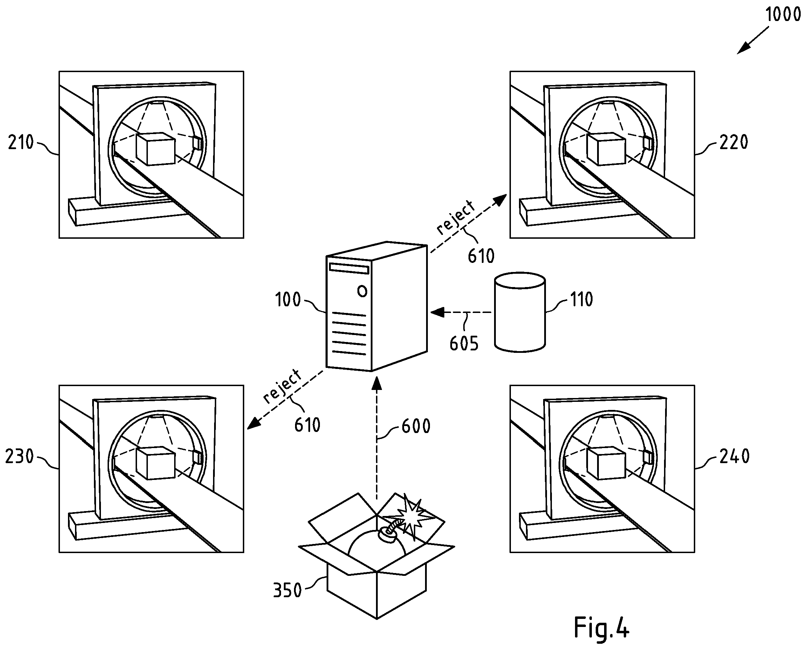

As exemplarily shown in Fig. 2, control apparatus 100 is connected to consignment unit examination apparatuses 210, 220, 230, 240, whereby a respective one or more of consignment unit examination apparatuses 210, 220, 230, 240 may be provided in a corresponding node of the logistics system 1000. Fig. 2 schematically illustrates arrows 501, 502, 504, 505 representing wireless and/or wired network connections by means of which control apparatus 100 and consignment unit examination apparatuses 210, 220, 230, 240 may communicate. As further shown in Fig. 2, the logistics system 1000 further comprises database 110 which is connected with control apparatus 100 via wireless and/or wired network connection 503. As indicated by the direction of arrows 501, 502, 503, 504, 505, control apparatus 100 may obtain e.g. attribute information relating to consignment units respectively inspected by consignment unit examination apparatuses 210, 220, 230, 240 and control storing of the attribute information in database 110. It is noted that storing of attribute information may be controlled similarly by each or some of consignment unit examination apparatuses 210, 220, 230, 240 that to this end may be directly connected with database 110 via a suitable network connection (not shown). Further, the direction of arrows as provided in Fig. 2 (and in Fig. 4 described below) is not understood to be limiting as network connections provided between entities shown in the figures are in an exemplary embodiment bi-directional network connections.

It is noted that in accordance with an exemplary embodiment, a wireless network connection corresponds to a communication path or link in a wireless communication network, in particular a terrestrial wireless communication network, in particular a Wireless Local Area Network (WLAN) and/or a cellular communication network. WLAN is for example specified by the standards of the IEEE 802.11 family (http://www.ieee.org/). A cellular communication network may for example be a mobile phone network like a 2G/3G/4G/5G cellular communication network. The 2G/3G/4G/5G cellular radio communication standards are developed by the 3GPP and presently available under http://www.3gpp.org/. A wireless connection may further include a Device-to-Device (D2D) communication path (e.g. involving vehicles, mobile devices, Road Side Units (RSU) or IOT devices).

Further, in accordance with an exemplary embodiment, a wired connection corresponds to a communication path or link in a wired communication network employing wire-based communication technology and may in an exemplary embodiment correspond to a telephone network connection, a cable television connection, an wired internet connection, a fiber-optic connection or an electromagnetic waveguide connection.

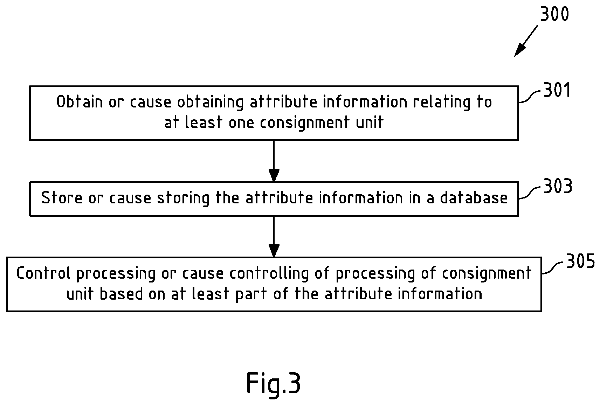

Fig. 3 is a flow chart 300 illustrating an exemplary embodiment of a method that may be performed by control apparatus 100 according to an exemplary embodiment for obtaining attribute information of a consignment unit (e.g. of the first and/or of the at least one second consignment unit).

In a step 301, attribute information to at least one consignment unit is obtained.

For example, as explained in relation to Fig. 1, upon initial inspection of a consignment unit (e.g. by the at least one third apparatus), e.g. after a parcel has been handed over to a postal service by a sender, apparatus 210 (an example of the at least one third apparatus) may acquire (obtain) one or more (photographic) images using one or more corresponding cameras comprised by and/or connected to apparatus 210. Alternatively or in addition, apparatus 210 may obtain information representative of a weight of the consignment unit. Attribute information such as the information representative of the images and/or of the weight may be provided by apparatus 210 e.g. to control apparatus 100 to be stored in database 110. Alternatively or in addition, attribute information such as the information representative of the images and/or of the weight may be provided by apparatus 210 directly to database 110 to be obtained by control apparatus 100 from database 110.

Further, information derived from the images such as label information and/or the further image information described in relation to Fig. 1 may be obtained by apparatus 210 and may be provided e.g. to control apparatus 100 to be stored in database 110 or may be directly provided to database 110 by apparatus 210 to be obtained by control apparatus 100 from the database 110. Alternatively or in addition, image information may be provided from apparatus 210 directly to control apparatus 100 or may be obtained from control apparatus 100 from the database 110 to be processed by control apparatus 100 for deriving said label information and/or said further image information described in relation to Fig. 1 by control apparatus 100 based on the image information obtained from apparatus 210. Thus, in an exemplary embodiment, control apparatus 100 is configured to derive the label information and/or the further image information from one or more images taken from respective one or more faces of a consignment unit.

In a step 303, attribute information is stored in a database.

As mentioned, control apparatus 100 is in an exemplary embodiment configured to store or cause storing of attribute information e.g. obtained from any one or more of consignment unit examination apparatuses 210, 220, 230, 240 in database 110.

In a step 305, processing of the consignment unit is controlled based on at least part of the attribute information.

For example, control apparatus 100 may be configured to derive information relating to a recipient of the consignment unit from the label information and may e.g. cause corresponding information to be displayed to an operator such that the consignment unit can be further processed. Alternatively or in addition, control apparatus 100 may be configured to provide one or more control signals to automatically control one or more devices such as conveyor belts, UAVs or UGVs provided in one or more corresponding nodes of logistics system 1000 for processing of the consignment unit.

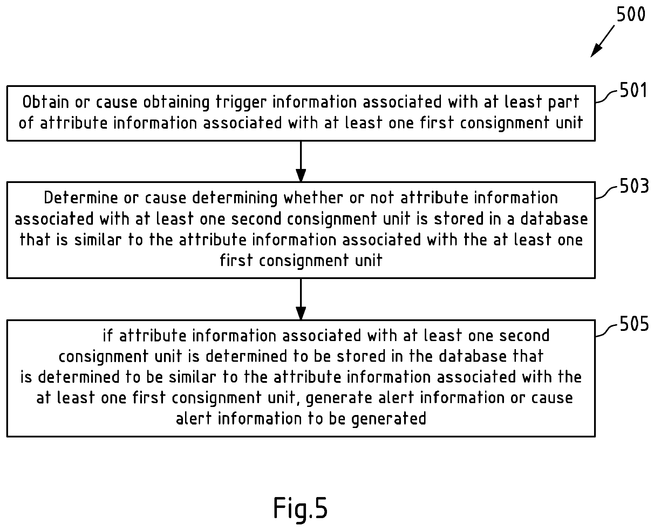

Fig. 4 illustrates exemplary processing performed by logistics system 1000 in reaction to a determination that a consignment unit has been determined to contain particular content (explosive and/or flammable material, illegal drugs, illegal weapons, at least one substance harmful to human health). Fig. 5 illustrates an exemplary method 500 in accordance with the first aspect of the present disclosure and will be described in connection with Fig. 4 in the following.

In a step 501 of Fig. 5, trigger information associated with at least part of attribute information associated with at least one first consignment unit is obtained.

For example, as exemplarily indicated in Fig. 4 by parcel bomb 350, an event may correspond to a case in which a parcel bomb explodes at a recipient. In such case, for example an operator of logistics system 1000 may be informed by police or by media about the event and may be provided with information on the consignment in relation with the parcel bomb. For example, depending on the case, at least part of items of label information (e.g. recipient information, shipment number, etc.) may still be derivable and may be provided to the operator who may then input this information (an example of trigger information) into control apparatus 110 (as illustrated by arrow 600 in Fig. 4) either via direct input using inputting means such as a real or virtual keyboard or indirectly using a mobile device such as a smartphone of the operator that may be connected to control apparatus 110 via a wireless network connection such as a WLAN connection and/or a cellular internet connection.

It is noted that while an event is exemplarily illustrated as an explosion of a parcel bomb, an event may also correspond to a determination of a consignment unit to contain particular content such as illegal goods upon a routine inspection (e.g. upon the described initial inspection) of a consignment unit using a consignment unit examination apparatus e.g. as disclosed in EP 3 537 133 A1. In such case, if for example an inspection by consignment unit examination apparatus 230 in Fig. 2 yields that an inspected parcel contains illegal content, trigger information may be transmitted from consignment unit examination apparatus 230 to control apparatus 100 via the network connection illustrated by arrow 505 in Fig. 2.

In a step 503, it is determined whether or not attribute information associated with at least one second consignment unit is stored in a database that is similar to the attribute information associated with the at least one first consignment unit. For example, control apparatus 100 may obtain attribute information associated with the first consignment unit from database 110 based on the trigger information as illustrated by arrow 605 in Fig. 4. If, for example, label information such as a shipment number of the first consignment unit is available, control apparatus 100 may obtain attribute information stored in the database 110 in association with the shipment number from database 110.

Further, the trigger information may comprise information representative of one or more images obtained from one or more faces of the first consignment unit (e.g. provided by police in case of a parcel bomb if one or more faces are still available or by a consignment unit examination apparatus in case the first consignment unit has been found upon routine inspection). In this case, the control apparatus 100 may derive further information from the one or more images e.g. employing a same image recognition algorithm as would be applied in case of an initial, intermediate or routine inspection of consignment units or may apply a same artificial intelligence based algorithm as would be applied in case of such inspection to derive further image information based on which the control apparatus may search the database 110 for attribute information associated with the first consignment unit and stored in database 110. Based on attribute information associated with the first consignment unit found in the database 110 based on the trigger information, control apparatus 100 may then further search database 110 for attribute information associated with any further consignment unit (candidate consignment unit) the attribute information of which is similar to the attribute information associated with the first consignment unit.

In a step 505, if attribute information associated with at least one second consignment unit is determined to be stored in the database that is determined to be similar to the attribute information associated with the at least one first consignment unit, method 500 further comprises generating alert information or causing alert information to be generated. As explained further herein, control apparatus 100 may for example display or cause a further device (e.g. an operator's mobile device) to display an alert based on the alert information, the alert information comprising identification information of the at least one second consignment unit

As also further explained herein and as illustrated by arrows 610 in Fig. 5, control apparatus 100 may interrupt or cause interrupting a logistics processing of the at least one second consignment unit based on the alert information. For example, in an exemplary embodiment, any one of apparatuses 220 and 230 comprises (or is connected to) a controller of a conveyor belt. Control apparatus 100 is in this embodiment configured to generate a control signal and to transmit the control signal (e.g. via a wireless and/or wired network connection) to apparatuses 220 and 230 for causing apparatuses 220 and 230 using their respective controllers to interrupt a transport processing of the at least one second consignment unit using the respective conveyor belts. Alternatively or in addition, control apparatus may generate a control signal and provide the same for interrupting (or preventing) a corresponding transport processing of a UGV and/or UAV and to cause the UGV and/or UAV to transport the at least one second consignment unit e.g. to a safe location for further inspection.

Alternatively or in addition, in an exemplary embodiment, control apparatus 100 is configured to cause sending alert information to at least one transport vehicle (e.g. a truck, a plane, a ship) transporting the at least one second consignment unit causing alert information to be displayed at the at least one transport vehicle, e.g. using a display provided at the at least one transport vehicle.

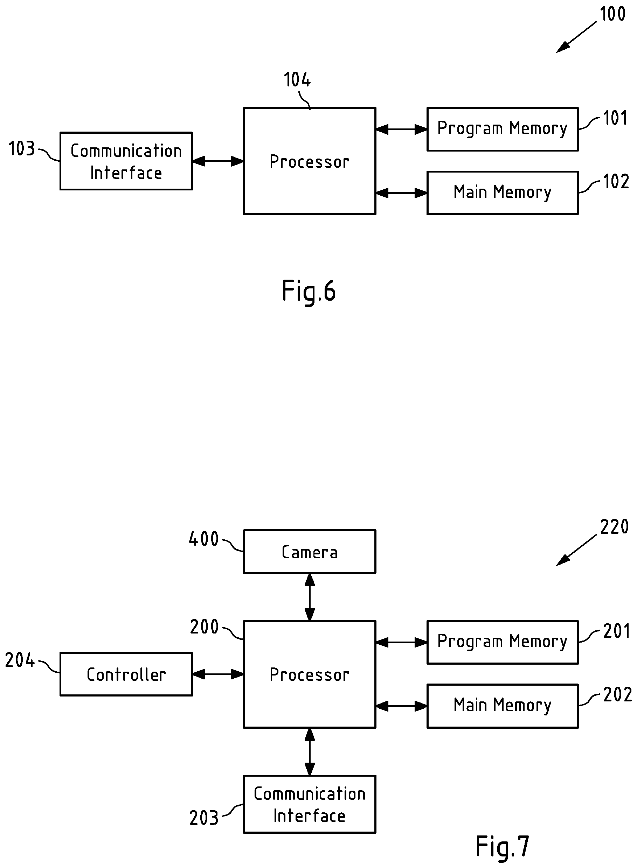

Fig. 6 is a block diagram of an exemplary embodiment of control apparatus 100 according to the first aspect of the present disclosure. In the following, it is assumed that control apparatus 100 of Figs. 2 and 4 corresponds to this control apparatus 100.

Control apparatus 100 comprises a processor 104. Processor 104 may represent a single processor or two or more processors, which are for instance at least partially coupled, for instance via a bus. Processor 104 executes a computer program code stored in program memory 101 (e.g. computer program code causing control apparatus 100 to perform any one embodiment of the disclosed method according to the first aspect (e.g. the steps of any one embodiment of the disclosed method) or a part thereof (e.g. at least some steps of any one embodiment of the disclosed method) (as for instance further described above with reference to Fig. 5), when executed on processor 104), and interfaces with a main memory 102. Program memory 101 may also contain an operating system for processor 104. Some or all of memories 101 and 102 may also be included into processor 104. One of or both of memories 101 and 102 may be fixedly connected to processor 104 or at least partially removable from processor 104, for example in the form of a memory card or stick.

A program memory (e.g. program memory 101) may for example be a non-volatile memory. Examples include a FLASH memory (or a part thereof), any of a ROM, PROM, EPROM, MRAM or a FeRAM (or a part thereof) or a hard disc (or a part thereof). For example, a program memory may for instance comprise a first memory section that is fixedly installed, and a second memory section that is removable, for instance in the form of a removable SD memory card. Further, a main memory (e.g. main memory 102) may for example be a volatile memory. Examples include a DRAM memory and the main memory may for example be used as a working memory for a processor (e.g. processor 104) when executing an operating system and/or programs.

Processor 104 further controls a wireless and/or wired communication interface 103 configured for communicating via the disclosed wireless and/or wired network, e.g. including a LAN, a WLAN and/or a cellular network (e.g. to transmit and receive WLAN and/or cellular radio signals). For example, wireless communication interface 103 may be or may comprise a LAN, a WLAN and/or a 2G/3G/4G/5G radio transceiver. Control apparatus 100 may use wireless communication interface 103 to receive attribute information from database 110 and/or from apparatus 210 of Fig. 2 (e.g. via a wireless and/or wired network connection). It is to be understood that any computer program code required for receiving and processing attribute information may be stored for example in program memory 101 and executed for example by processor 104.

The components 101, 102 and 103 of control apparatus 100 may for instance be connected with processor 104 by means of one or more serial and/or parallel busses. It is to be understood that control apparatus 100 may comprise various other components like a user interface for receiving user input and/or a display for displaying an alert as disclosed further herein.

Fig. 7 is a block diagram of an exemplary embodiment of consignment unit examination apparatus 220 (an example of a second and/or third apparatus according to an embodiment of the present disclosure). In the following, it is assumed that apparatus 220 of Fig. 4 corresponds to this apparatus 220.

Apparatus 220 comprises a processor 200. Processor 200 may represent a single processor or two or more processors, which are for instance at least partially coupled, for instance via a bus. Processor 200 executes a computer program code stored in program memory 201 (e.g. computer program code causing apparatus 220 to perform any one embodiment of the disclosed method disclosed in relation to the system according to the second aspect (e.g. the steps of any one embodiment of the disclosed method) or a part thereof (e.g. at least some steps of any one embodiment of the disclosed method), when executed on processor 200), and interfaces with a main memory 202. Program memory 201 may also contain an operating system for processor 200. Some or all of memories 201 and 202 may also be included into processor 200. One of or both of memories 201 and 202 may be fixedly connected to processor 200 or at least partially removable from processor 200, for example in the form of a memory card or stick.

A program memory (e.g. program memory 201) may for example be a non-volatile memory. Examples include a FLASH memory (or a part thereof), any of a ROM, PROM, EPROM, MRAM or a FeRAM (or a part thereof) or a hard disc (or a part thereof). For example, a program memory may for instance comprise a first memory section that is fixedly installed, and a second memory section that is removable, for instance in the form of a removable SD memory card. Further, a main memory (e.g. main memory 202) may for example be a volatile memory. Examples include a DRAM memory and the main memory may for example be used as a working memory for a processor (e.g. processor 200) when executing an operating system and/or programs.

Processor 200 further controls a wireless and/or wired communication interface 203 configured for communicating via the disclosed wireless and/or wired network, e.g. including a LAN, a WLAN and/or a cellular network (e.g. to transmit and receive WLAN and/or cellular radio signals). For example, wireless communication interface 203 may be or may comprise a LAN, a WLAN and/or a 2G/3G/4G/5G radio transceiver. Apparatus 220 may use wireless communication interface 203 to transmit attribute information to control apparatus 100 and/or to database 110 (e.g. via a wireless and/or wired network connection). It is to be understood that any computer program code required for transmitting and processing attribute information may be stored for example in program memory 201 and executed for example by processor 200.

Processor 200 further controls a camera 400 for obtaining at least one image of at least one face of a consignment unit It is to be understood that any computer program code required for obtaining images using the camera 400 may be stored for example in program memory 201 and executed for example by processor 200.

Processor 200 further controls a controller 204 which is in an exemplary embodiment a controller of a conveyor belt. Processor 200 controls controller 204 for interrupting transporting of a consignment unit in response to a control signal received from control apparatus 100 (e.g. via a wireless and/or wired network connection) generated at the control apparatus 100 in response to generation of alert information as disclosed further herein. It is to be understood that any computer program code required for operating controller 204 may be stored for example in program memory 201 and executed for example by processor 200.

The components 201 to 204 of apparatus 220 may for instance be connected with processor 200 by means of one or more serial and/or parallel busses. It is to be understood that apparatus 220 may comprise various other components like a user interface for receiving user input and/or a display for displaying an alert as disclosed further herein.

The following example embodiments are also disclosed:
Embodiment 1: A method performed by at least one apparatus, the method comprising:
   - obtaining or causing obtaining trigger information associated with attribute information associated with at least one first consignment unit and/or associated with at least part of attribute information associated with at least one first consignment unit;
   - determining or causing determining whether or not attribute information associated with at least one second consignment unit is stored in a database that is similar to the attribute information associated with the at least one first consignment unit;
      if attribute information associated with at least one second consignment unit is determined to be stored in the database that is determined to be similar to the attribute information associated with the at least one first consignment unit:
   - generating alert information or causing alert information to be generated.
Embodiment 2: The method according to embodiment 1, further comprising:
   - obtaining or causing obtaining the attribute information associated with the first consignment unit and the attribute information associated with the second consignment unit from the database; and
   - comparing or causing comparing the attribute information associated with the first consignment unit with the attribute information associated with the second consignment unit.
Embodiment 3: The method according to any of embodiments 1 or 2, wherein the at least one first apparatus obtains the attribute information associated with the at least one first consignment unit from the database based on the obtained trigger information.
Embodiment 4: The method according to any of embodiments 1 to 3, further comprising:
   - providing or causing of providing the alert information to cause at least one apparatus to perform an action for causing a logistics processing of the at least one second consignment unit to be interrupted.
Embodiment 5: The method according to any of embodiments 1 to 4, further comprising:
   - providing or causing of providing the alert information to cause at least one apparatus to perform an action comprising at least one of:
      - causing an alert and/or identification information of the at least one second consignment unit to be displayed based on the generated alert information;
      - causing a logistics process in relation to the at least one second consignment unit to be interrupted based on the generated alert information;
      - causing the at least one second consignment unit to be mechanically discharged from a conveyor belt transporting the second consignment unit based on the generated alert information;
      - causing a recipient of the at least one second consignment unit to be informed based on the generated alert information.
Embodiment 6: The method according to any of embodiments 1 to 5, wherein the at least one apparatus caused to perform an action corresponds to or is comprised by at least one of
   - a stand-alone computer;
   - a mobile device;
   - an apparatus installed at a node of a logistics system;
   - a consignment unit sorting machine and/or a consignment unit examination apparatus;
   - a transport vehicle for transporting consignment units;
   - an unmanned aerial vehicle, UAV;
   - an unmanned ground vehicle, UGV;
   - a robot, e.g. a robot with at least one embedded camera, a sorting robot, a collaborative robot, a shuttle robot, and/or a picking robot;
   - a control apparatus of a conveyor belt.
Embodiment 7: The method according to any of embodiments 1 to 6, wherein the trigger information is obtained after and/or in response to the at least one first consignment unit being determined as being or having been used to carry at least one of:
   - explosive and/or flammable material;
   - illegal drugs;
   - illegal weapons;
   - at least one substance harmful to human health;
   - different illegal content.
Embodiment 8: The method according to any of embodiments 1 to 7, further comprising:
   - determining or causing determining whether or not attribute information stored in the database and associated with at least one second consignment unit is similar to the attribute information associated with the at least one first consignment unit, wherein attribute information stored in the database and associated with at least one second consignment unit is determined to be similar to the attribute information associated with the at least one first consignment unit if at least one of the criteria are met:
      - a value representative of a similarity between the attribute information stored in the database and associated with at least one second consignment unit and attribute information associated with the at least one first consignment unit is equal to or above a predefined threshold;
      - a difference between at least one first parameter representative of attribute information associated with the at least one first consignment unit and at least one second parameter representative of attribute information associated with the at least one second consignment unit is equal to or below a corresponding at least one predetermined threshold.
Embodiment 9: The method according to any of embodiments 1 to 8, wherein attribute information of a consignment unit comprises at least:
   - information representative of a weight of the consignment unit;
   - information representative of a size of the consignment unit;
   - information representative of a geometrical shape of the consignment unit;
   - information representative of a material of the consignment unit;
   - information representative of a material and/or a dimension of a sealing element used for closing and/or sealing the consignment unit;
   - information of a class of the consignment unit;
   - physical information derived from a label of the consignment unit.
Embodiment 10: The method according to any of embodiments 1 to 9, wherein attribute information of a consignment unit comprises at least:
   - image information obtained via an image recognition algorithm based on at least one image taken of at least one corresponding face of the consignment unit;
   - object information obtained via an object recognition algorithm based on at least two images taken of at least two corresponding faces of the consignment unit
   - at least one image feature vector representative of at least one image taken from at least one corresponding surface of the consignment unit.
Embodiment 11: The method according to any of embodiments 1 to 10, wherein attribute information of a consignment unit comprises at least:
   - information unique to a printer used for printing of a label of the consignment unit and derived from the consignment unit;
   - label information related to the consignment unit
Embodiment 12: The method according to any of embodiments 1 to 11, further comprising:
   - determining or causing determining whether attribute information stored in the database associated with at least one second consignment unit is similar to the attribute information associated with the at least one first consignment unit using an artificial intelligence based and/or deep learning and/or machine learning based algorithm configured to compare at least part of attribute information associated with the at least one first consignment unit to attribute information associated with the at least one second consignment unit
Embodiment 13: A system comprising at least one first apparatus configured to perform at least the method according to any one of embodiments 1 to 12, and at least one second apparatus configured to perform a method comprising:
   - obtaining or causing of obtaining the alert information from the at least one first apparatus; and at least one of:
   - displaying or causing of displaying an alert based on the alert information;
   - interrupting or causing interrupting a logistics processing of the at least one second consignment unit based on the alert information.
Embodiment 14: The system according to embodiment 13, wherein the at least one second apparatus corresponds to or is comprised by at least one of:
   - a stand-alone computer;
   - a mobile device;
   - an apparatus installed at a node of a logistics system;
   - a consignment unit sorting machine and/or a consignment unit examination apparatus;
   - a transport vehicle for transporting consignment units;
   - an unmanned aerial vehicle, UAV;
   - an unmanned ground vehicle, UGV;
   - a robot, e.g. a robot with at least one embedded camera, a sorting robot, a collaborative robot, a shuttle robot, and/or a picking robot;
   - a control apparatus of a conveyor belt.
Embodiment 15: The system according to any of embodiments 13 to 14, wherein the at least one second apparatus obtains the alert information from the at least one first apparatus via a wireless and/or a wired network connection.
Embodiment 16: The system according to any of embodiments 13 to 15, wherein, based on the alert information, the at least one second apparatus is configured to perform at least one of:
   - displaying or causing of displaying an alert based on the alert information;
   - interrupting or causing interrupting a logistics processing of the at least one second consignment unit based on the alert information.
Embodiment 17: The system according to any of embodiments 13 to 16, wherein the at least one second apparatus corresponds to or is comprised by the at least one apparatus caused to perform an action.
Embodiment 18: The system according to any of embodiments 13 to 17, wherein the system further comprises at least one third apparatus configured to perform a method comprising:
   - obtaining or causing of obtaining attribute information relating to at least one consignment unit;
   - storing or causing of storing the attribute information in the database.
Embodiment 19: The system according to any of embodiments 13 to 18, wherein the at least one third apparatus is connected to at least one sensor configured to obtain information representative of a weight of the at least one consignment unit and/or comprises or is connected to at least one camera arranged for and being configured to obtain at least one image of at least one corresponding face of the at least one consignment unit
Embodiment 20: An apparatus comprising means for performing the method according to any of embodiments 1 to 12.
Embodiment 21: An apparatus comprising at least one processor and at least one memory including computer program code, said at least one memory and said computer program code configured to, with said at least one processor, cause said apparatus to perform the steps of the method according to any of embodiments 1 to 12.
Embodiment 22: A computer program code, the computer program code when executed by a processor causing an apparatus to perform the method according to any of embodiments 1 to 12.
Embodiment 23: A non-transitory computer readable storage medium in which computer program code is stored, said computer program code when executed by a processor causing at least one apparatus to perform the steps of the method according to any of embodiments 1 to 12.

Any presented connection in the described embodiments is to be understood in a way that the involved components are operationally coupled. Thus, the connections can be direct or indirect with any number or combination of intervening elements, and there may be merely a functional relationship between the components.

It will be understood that all presented embodiments are only exemplary, and that any feature presented for a particular exemplary embodiment may be used with any aspect of the present disclosure on its own or in combination with any feature presented for the same or another particular exemplary embodiment and/or in combination with any other feature not mentioned. It will further be understood that any feature presented for an example embodiment in a particular category may also be used in a corresponding manner in an example embodiment of any other category. The scope of the invention is set out by the appended claims.

## Claims

1. A method performed by at least one apparatus, the method comprising:
- obtaining or causing obtaining trigger information associated with at least part of attribute information associated with at least one first consignment unit, the attribute information being stored in association with the at least one first consignment unit in a database;
- obtaining or causing obtaining the attribute information associated with the at least one first consignment unit from the database based on the obtained trigger information;
- determining or causing determining whether or not attribute information associated with at least one second consignment unit is stored in the database that is similar to the attribute information associated with the at least one first consignment unit;
if attribute information associated with at least one second consignment unit is determined to be stored in the database that is similar to the attribute information associated with the at least one first consignment unit:
- generating alert information or causing alert information to be generated.

2. The method according to claim 1, further comprising:
- providing or causing of providing the alert information to cause at least one apparatus to perform an action for causing a logistics processing of the at least one second consignment unit to be interrupted.

3. The method according to any of claims 1 to 2, further comprising:
- providing or causing of providing the alert information to cause at least one apparatus to perform an action comprising at least one of:
- causing an alert and/or identification information of the at least one second consignment unit to be displayed based on the generated alert information;
- causing a logistics process in relation to the at least one second consignment unit to be interrupted based on the generated alert information;
- causing the at least one second consignment unit to be mechanically discharged from a conveyor belt transporting the second consignment unit based on the generated alert information;
- causing a recipient of the at least one second consignment unit to be informed based on the generated alert information.

4. The method according to any of claims 2 or 3, wherein the at least one apparatus caused to perform an action corresponds to or is comprised by at least one of
- a stand-alone computer;
- a mobile device;
- an apparatus installed at a node of a logistics system;
- a consignment unit sorting machine and/or a consignment unit examination apparatus;
- a transport vehicle for transporting consignment units;
- an unmanned aerial vehicle, UAV;
- an unmanned ground vehicle, UGV;
- a robot, e.g. a robot with at least one embedded camera, a sorting robot, a collaborative robot, a shuttle robot, and/or a picking robot;
- a control apparatus of a conveyor belt.

5. The method according to any of claims 1 to 4, wherein the trigger information is obtained after and/or in response to the at least one first consignment unit being determined as being or having been used to carry at least one of:
- explosive and/or flammable material;
- illegal drugs;
- illegal weapons;
- at least one substance harmful to human health;
- different illegal content.

6. The method according to any of claims 1 to 5, further comprising:
- determining or causing determining whether or not attribute information stored in the database and associated with at least one second consignment unit is similar to the attribute information associated with the at least one first consignment unit, wherein attribute information stored in the database and associated with at least one second consignment unit is determined to be similar to the attribute information associated with the at least one first consignment unit if at least one of the criteria are met:
- a value representative of a similarity between the attribute information stored in the database and associated with at least one second consignment unit and attribute information associated with the at least one first consignment unit is equal to or above a predefined threshold;
- a difference between at least one first parameter representative of attribute information associated with the at least one first consignment unit and at least one second parameter representative of attribute information associated with the at least one second consignment unit is equal to or below a corresponding at least one predetermined threshold.

7. The method according to any of claims 1 to 6, wherein attribute information of a consignment unit comprises at least one of:
- information representative of a weight of the consignment unit;
- information representative of a size of the consignment unit;
- information representative of a geometrical shape of the consignment unit;
- information representative of a material of the consignment unit;
- information representative of a material and/or a dimension of a sealing element used for closing and/or sealing the consignment unit;
- information of a class of the consignment unit;
- physical information derived from a label of the consignment unit.

8. The method according to any of claims 1 to 7, wherein attribute information of a consignment unit comprises at least one of:
- image information obtained via an image recognition algorithm based on at least one image taken of at least one corresponding face of the consignment unit;
- object information obtained via an object recognition algorithm based on at least two images taken of at least two corresponding faces of the consignment unit
- at least one image feature vector representative of at least one image taken from at least one corresponding surface of the consignment unit

9. The method according to any of claims 1 to 8, wherein attribute information of a consignment unit comprises at least one of:
- information unique to a printer used for printing of a label of the consignment unit and derived from the consignment unit;
- label information related to the consignment unit

10. The method according to any of claims 1 to 5, further comprising:
- determining or causing determining whether or not attribute information stored in the database and associated with at least one second consignment unit is similar to the attribute information associated with the at least one first consignment unit using an artificial intelligence based and/or deep learning and/or machine learning based algorithm configured to compare at least part of attribute information associated with the at least one first consignment unit to attribute information associated with the at least one second consignment unit.

11. A system comprising at least one first apparatus configured to perform at least the method according to any one of claims 1 to 10, and at least one second apparatus configured to perform a method comprising:
- obtaining or causing of obtaining the alert information from the at least one first apparatus; and at least one of:
- displaying or causing of displaying an alert based on the alert information;
- interrupting or causing interrupting a logistics processing of the at least one second consignment unit based on the alert information.

12. The system according to claim 11, wherein the at least one second apparatus corresponds to or is comprised by at least one of:
- a stand-alone computer;
- a mobile device;
- an apparatus installed at a node of a logistics system;
- a consignment unit sorting machine and/or a consignment unit examination apparatus;
- a transport vehicle for transporting consignment units;
- an unmanned aerial vehicle, UAV;
- an unmanned ground vehicle, UGV;
- a robot, e.g. a robot with at least one embedded camera, a sorting robot, a collaborative robot, a shuttle robot, and/or a picking robot;
- a control apparatus of a conveyor belt.

13. An apparatus comprising means for performing the method according to any of claims 1 to 10.

14. A computer program code, the computer program code when executed by a processor causing an apparatus to perform the method according to any of claims 1 to 10.

15. A non-transitory computer readable storage medium in which computer program code is stored, said computer program code when executed by a processor causing at least one apparatus to perform the steps of the method according to any of claims 1 to 10.

## Patentansprüche

1. Verfahren, ausgeführt von zumindest einer Vorrichtung, wobei das Verfahren umfasst:
- Erhalten oder Veranlassen des Erhaltens von Triggerinformationen, die mit zumindest einem Teil von Attributinformationen assoziiert sind, die mit zumindest einer ersten Versandeinheit assoziiert sind, wobei die Attributinformationen in einer Datenbank in Assoziation mit der zumindest einen ersten Versandeinheit gespeichert sind;
- Erhalten oder Veranlassen des Erhaltens der mit der zumindest einen ersten Versandeinheit assoziierten Attributinformationen aus der Datenbank basierend auf den erhaltenen Triggerinformationen;
- Bestimmen oder Veranlassen des Bestimmens, ob Attributinformationen, die mit zumindest einer zweiten Versandeinheit assoziiert sind, in der Datenbank gespeichert sind, die den Attributinformationen der zumindest einen ersten Versandeinheit ähnlich sind;
wenn bestimmt wird, dass Attributinformationen, die mit zumindest einer zweiten Versandeinheit assoziiert sind, in der Datenbank gespeichert sind und den Attributinformationen der zumindest einen ersten Versandeinheit ähnlich sind:
- Erzeugen von Meldungsinformationen oder Veranlassen des Erzeugens von Meldungsinformationen.

2. Verfahren nach Anspruch 1, weiter umfassend:
- Bereitstellen oder Veranlassen des Bereitstellens der Meldungsinformationen, um zumindest eine Vorrichtung zu veranlassen, eine Aktion auszuführen, die veranlasst, dass ein Logistikprozess der zumindest einen zweiten Versandeinheit unterbrochen wird.

3. Verfahren nach einem der Ansprüche 1 oder 2, weiter umfassend:
- Bereitstellen oder Veranlassen des Bereitstellens der Meldungsinformationen, um zumindest eine Vorrichtung zu veranlassen, eine Aktion auszuführen, die zumindest Folgendes umfasst:
- Veranlassen, dass basierend auf den erzeugten Meldungsinformationen eine Meldung und/oder Identifikationsinformationen der zumindest einen zweiten Versandeinheit angezeigt werden;
- Veranlassen, dass basierend auf den erzeugten Meldungsinformationen ein Logistikprozess in Bezug auf die zumindest eine zweite Versandeinheit unterbrochen wird;
- Veranlassen, dass basierend auf den erzeugten Meldungsinformationen die zumindest eine zweite Versandeinheit mechanisch von einem Förderband, das die zweite Versandeinheit transportiert, ausgeschleust wird;
- Veranlassen, dass basierend auf den erzeugten Meldungsinformationen ein Empfänger der zumindest einen zweiten Versandeinheit informiert wird.

4. Verfahren nach einem der Ansprüche 2 oder 3, wobei die zumindest eine Vorrichtung, die veranlasst wird, eine Aktion auszuführen, zumindest eine der folgenden umfasst oder einem der folgenden entspricht:
- ein eigenständiger Computer;
- ein mobiles Gerät;
- eine an einem Knoten eines Logistiksystems installierte Vorrichtung;
- eine Versandeinheitensortiermaschine und/oder eine Versandeinheitenprüfvorrichtung;
- ein Transportfahrzeug zum Transportieren von Versandeinheiten;
- ein unbemanntes Luftfahrzeug, UAV;
- ein unbemanntes Bodenfahrzeug, UGV;
- ein Roboter, z. B. ein Roboter mit zumindest einer eingebetteten Kamera, ein Sortierroboter, ein kollaborativer Roboter, ein Shuttle-Roboter und/oder ein Kommissionierroboter;
- eine Steuervorrichtung eines Förderbands.

5. Verfahren nach einem der Ansprüche 1 bis 4, wobei die Triggerinformationen nach und/oder in Reaktion darauf erhalten werden oder das Erhalten veranlasst wird, dass festgestellt wird, dass die zumindest eine erste Versandeinheit verwendet wird oder wurde, um zumindest eines der folgenden zu befördern:
- explosives und/oder brennbares Material;
- illegale Drogen;
- illegale Waffen;
- zumindest einen die menschliche Gesundheit schädigenden Stoff;
- anderer illegaler Inhalt.

6. Verfahren nach einem der Ansprüche 1 bis 5, weiter umfassend:
- Bestimmen oder Veranlassen des Bestimmens, ob Attributinformationen, die in der Datenbank gespeichert und mit zumindest einer zweiten Versandeinheit assoziiert sind, den Attributinformationen, die mit der zumindest einen ersten Versandeinheit assoziiert sind, ähnlich sind, wobei bestimmt wird, dass Attributinformationen, die in der Datenbank gespeichert und mit zumindest einer zweiten Versandeinheit assoziiert sind, den Attributinformationen, die mit der zumindest einen ersten Versandeinheit assoziiert sind, ähnlich sind, wenn zumindest eines der folgenden Kriterien erfüllt ist:
- ein Wert, der eine Ähnlichkeit zwischen den in der Datenbank gespeicherten und mit zumindest einer zweiten Versandeinheit assoziierten Attributinformationen und den mit der zumindest einen ersten Versandeinheit assoziierten Attributinformationen repräsentiert, ist gleich oder größer als ein vorgegebener Schwellwert;
- eine Differenz zwischen zumindest einem ersten Parameter, der Attributinformationen der zumindest einen ersten Versandeinheit repräsentiert, und zumindest einem zweiten Parameter, der Attributinformationen der zumindest einen zweiten Versandeinheit repräsentiert, ist gleich oder kleiner als zumindest ein entsprechender vorbestimmter Schwellwert.

7. Verfahren nach einem der Ansprüche 1 bis 6, wobei Attributinformationen einer Versandeinheit zumindest eines der folgenden umfassen:
- Informationen, die ein Gewicht der Versandeinheit repräsentieren;
- Informationen, die eine Größe der Versandeinheit repräsentieren;
- Informationen, die eine geometrische Form der Versandeinheit repräsentieren;
- Informationen, die ein Material der Versandeinheit repräsentieren;
- Informationen, die ein Material und/oder eine Abmessung eines zum Verschließen und/oder Versiegeln der Versandeinheit verwendeten Dichtelements repräsentieren;
- Informationen einer Klasse der Versandeinheit;
- physikalische Informationen, die von einem Etikett der Versandeinheit abgeleitet sind.

8. Verfahren nach einem der Ansprüche 1 bis 7, wobei Attributinformationen einer Versandeinheit zumindest eines der folgenden umfassen:
- Bildinformationen, die mittels eines Bilderkennungsalgorithmus basierend auf zumindest einem von zumindest einer entsprechenden Seite der Versandeinheit aufgenommenen Bild erhalten werden;
- Objektinformationen, die mittels eines Objekterkennungsalgorithmus basierend auf zumindest zwei von zumindest zwei entsprechenden Seiten der Versandeinheit aufgenommenen Bildern erhalten werden;
- zumindest einen Bildmerkmalsvektor, der zumindest ein von zumindest einer entsprechenden Oberfläche der Versandeinheit aufgenommenes Bild repräsentiert.

9. Verfahren nach einem der Ansprüche 1 bis 8, wobei Attributinformationen einer Versandeinheit zumindest eines der folgenden umfassen:
- Informationen, die für einen Drucker spezifisch sind, der zum Drucken eines Etiketts der Versandeinheit verwendet wird, und die von der Versandeinheit abgeleitet sind;
- Etikettinformationen in Bezug auf die Versandeinheit.

10. Verfahren nach einem der Ansprüche 1 bis 5, weiter umfassend:
- Bestimmen oder Veranlassen des Bestimmens, ob Attributinformationen, die in der Datenbank gespeichert und mit zumindest einer zweiten Versandeinheit assoziiert sind, den Attributinformationen, die mit der zumindest einen ersten Versandeinheit assoziiert sind, ähnlich sind, unter Verwendung eines auf künstlicher Intelligenz und/oder Deep Learning und/oder maschinellem Lernen basierenden Algorithmus, der eingerichtet ist, zumindest einen Teil der mit der zumindest einen ersten Versandeinheit assoziierten Attributinformationen mit Attributinformationen, die mit der zumindest einen zweiten Versandeinheit assoziiert sind, zu vergleichen.

11. System, umfassend zumindest eine erste Vorrichtung, die eingerichtet ist, zumindest das Verfahren nach einem der Ansprüche 1 bis 10 auszuführen, und zumindest eine zweite Vorrichtung, die eingerichtet ist, ein Verfahren auszuführen, das umfasst:
- Erhalten oder Veranlassen des Erhaltens der Meldungsinformationen von der zumindest einen ersten Vorrichtung;
und zumindest eines von:
- Anzeigen oder Veranlassen des Anzeigens einer Meldung basierend auf den Meldungsinformationen;
- Unterbrechen oder Veranlassen des Unterbrechens eines Logistikprozesses der zumindest einen zweiten Versandeinheit basierend auf den Meldungsinformationen.

12. System nach Anspruch 11, wobei die zumindest eine zweite Vorrichtung zumindest eines der folgenden umfasst oder einem der folgenden entspricht:
- ein eigenständiger Computer;
- ein mobiles Gerät;
- eine an einem Knoten eines Logistiksystems installierte Vorrichtung;
- eine Versandeinheitensortiermaschine und/oder eine Versandeinheitenprüfvorrichtung;
- ein Transportfahrzeug zum Transportieren von Versandeinheiten;
- ein unbemanntes Luftfahrzeug, UAV;
- ein unbemanntes Bodenfahrzeug, UGV;
- ein Roboter, z. B. ein Roboter mit zumindest einer eingebetteten Kamera, ein Sortierroboter, ein kollaborativer Roboter, ein Shuttle-Roboter und/oder ein Kommissionierroboter;
- eine Steuervorrichtung eines Förderbands.

13. Vorrichtung, umfassend Mittel zum Ausführen des Verfahrens nach einem der Ansprüche 1 bis 10.

14. Computerprogrammcode, der, wenn er von einem Prozessor ausgeführt wird, eine Vorrichtung veranlasst, das Verfahren nach einem der Ansprüche 1 bis 10 auszuführen.

15. A non-transitory computer readable storage medium in which computer program code is stored, said computer program code when executed by a processor causing at least one apparatus to perform the steps of the method according to any of claims 1 to 10.

## Revendications

1. Procédé mis en œuvre par au moins un appareil, le procédé comprenant :
- l'obtention ou la mise en œuvre de l'obtention d'informations de déclenchement associées à au moins une partie des informations d'attribut associées à au moins une première unité d'expédition, lesdites informations d'attribut étant stockées en association avec ladite au moins une première unité d'expédition dans une base de données ;
- l'obtention ou la mise en œuvre de l'obtention des informations d'attribut associées à ladite au moins une première unité d'expédition à partir de la base de données sur la base des informations de déclenchement obtenues ;
- la détermination ou la mise en œuvre de la détermination du fait que les informations d'attribut associées à au moins une deuxième unité d'expédition sont stockées dans la base de données et sont similaires aux informations d'attributs associées à ladite au moins une première unité d'expédition ;
si l'on détermine que des informations d'attributs associées à au moins une deuxième unité d'expédition sont stockées dans la base de données et sont similaires aux informations d'attributs associées à la au moins une première unité d'expédition :
- générer des informations d'alerte ou faire en sorte que des informations d'alerte soient générées.

2. Procédé selon la revendication 1, comprenant en outre :
la fourniture ou la mise en œuvre de la fourniture des informations d'alerte afin d'amener au moins un appareil à effectuer une action visant à déclencher un traitement logistique de la au moins une seconde unité d'expédition.

3. Procédé selon l'une quelconque des revendications 1 à 2, comprenant en outre :
- fournir ou faire en sorte que soient fournies les informations d'alerte afin d'amener au moins un appareil à effectuer une action comprenant au moins l'une des opérations suivantes :
- faire en sorte qu'une information d'alerte et/ou d'identification de ladite au moins une deuxième unité d'expédition soit affichée sur la base de l'information d'alerte générée ; faire en sorte qu'un processus logistique relatif à ladite au moins une deuxième unité d'expédition soit interrompu sur la base de l'information d'alerte générée ;
- faire en sorte que ladite au moins une deuxième unité d'expédition soit mécaniquement déchargée d'un tapis roulant transportant ladite deuxième unité d'expédition sur la base des informations d'alerte générées ;
- faire en sorte que le destinataire de ladite au moins une deuxième unité d'expédition soit informé sur la base des informations d'alerte générées.

4. Procédé selon l'une quelconque des revendications 2 ou 3, dans lequel le au moins un appareil amené à effectuer une action correspond à ou est constitué d'au moins l'un des éléments suivants
- un ordinateur autonome ;
- un appareil mobile ;
- un appareil installé à un noeud d'un système logistique ;
- une machine de tri d'unités d'expédition et/ou un appareil d'examen d'unités d'expédition ;
- un véhicule de transport destiné à transporter des unités d'expédition ;
- un véhicule aérien sans pilote, ou drone (UAV) ;
- un véhicule terrestre sans pilote (UGV) ;
- un robot, par exemple un robot équipé d'au moins une caméra intégrée, un robot de tri, un robot navette et/ou un robot de prélèvement ;
- un dispositif de commande d'un tapis roulant.

5. Procédé selon l'une quelconque des revendications 1 à 4, dans lequel les informations de déclenchement sont obtenues après et/ou en réponse au fait que la au moins une première unité de chargement est déterminée comme étant ou ayant été utilisée pour transporter au moins l'un des éléments suivants :
- des matières explosives et/ou inflammables ;
- des drogues illicites ;
- des armes illégales ;
- au moins une substance nocive pour la santé humaine ;
- différents contenus illégaux.

6. Procédé selon l'une quelconque des revendications 1 à 5, comprenant en outre :
- déterminer ou faire déterminer si les informations d'attributs stockées dans la base de données et associées à au moins une deuxième unité d'expédition sont similaires aux informations d'attributs associées à la au moins une première unité d'expédition, dans laquelle les informations d'attributs stockées dans la base de données et associées à la au moins une deuxième unité d'expédition sont jugées similaires aux informations d'attributs associées à la au moins une première unité d'expédition si au moins l'un des critères suivants est rempli :
- une valeur représentative d'une similitude entre les informations d'attributs stockées dans la base de données et associées à au moins une deuxième unité d'expédition et les informations d'attribut associées à ladite au moins une première unité d'expédition est égale ou supérieure à un seuil prédéfini ;
- une différence entre au moins un premier paramètre représentatif des informations d'attribut associées à ladite au moins une première unité d'expédition et au moins un deuxième paramètre représentatif des informations d'attribut associées à la au moins une deuxième unité d'expédition est égale ou inférieure à au moins un seuil prédéterminé correspondant.

7. Procédé selon l'une quelconque des revendications 1 à 6, dans lequel les informations d'attribut d'une unité d'expédition comprennent au moins l'un des éléments suivants :
- des informations représentatives d'un poids de l'unité d'expédition ;
- des informations représentatives d'une taille de l'unité d'expédition ;
- des informations relatives à la forme géométrique de l'unité d'expédition ;
- des informations relatives au matériau de l'unité d'expédition ;
- des informations relatives au matériau et/ou aux dimensions d'un élément de scellage utilisé pour fermer et/ou sceller l'unité d'expédition ;
- des informations sur la catégorie de l'unité d'expédition ;
- des informations physiques dérivées d'une étiquette de l'unité d'expédition.

8. Procédé selon l'une quelconque des revendications 1 à 7, dans lequel les informations d'attribut d'une unité d'expédition comprennent au moins l'une des suivantes :
- des informations d'image obtenues via un algorithme de reconnaissance d'image basé sur au moins une image prise d'au moins une face correspondante de l'unité d'expédition ;
- des informations d'objet obtenues via un algorithme de reconnaissance d'objet basé sur au moins deux images prises d'au moins deux faces correspondantes de l'unité d'expédition ;
- au moins un vecteur de caractéristiques d'image représentatif d'au moins une image prise à partir d'au moins une surface correspondante de l'unité d'expédition.

9. Procédé selon l'une quelconque des revendications 1 à 8, dans lequel les informations d'attribut d'une unité d'expédition comprennent au moins l'un des éléments suivants :
- des informations propres à une imprimante utilisée pour l'impression d'une étiquette de l'unité d'expédition et dérivées de l'unité d'expédition ;
- des informations d'étiquette relatives à l'unité d'expédition.

10. Procédé selon l'une quelconque des revendications 1 à 5, comprenant en outre :
- déterminer ou faire déterminer si des informations d'attributs stockées dans la base de données et associées à au moins une deuxième unité d'expédition sont similaires aux informations d'attributs associées à la au moins une première unité d'expédition à l'aide d'un système basé sur l'intelligence artificielle et/ou l'apprentissage profond et/ou l'apprentissage automatique configuré pour comparer au moins une partie des informations d'attributs associées à ladite au moins une première unité d'expédition aux informations d'attributs associées à ladite au moins une deuxième unité d'expédition.

11. Système comprenant au moins un premier appareil configuré pour exécuter au moins le procédé selon l'une quelconque des revendications 1 à 10, et au moins un deuxième appareil configuré pour exécuter un procédé comprenant :
- l'obtention ou la mise en œuvre de l'obtention des informations d'alerte à partir dudit au moins un premier appareil ; et au moins l'une des opérations suivantes :
- afficher ou faire afficher une alerte sur la base des informations d'alerte ;
- interrompre ou faire en sorte d'interrompre un traitement logistique de ladite au moins une deuxième unité d'expédition sur la base des informations d'alerte.

12. Système selon la revendication 11, dans lequel le ou les seconds appareils correspondent à l'un au moins des éléments suivants ou sont constitués par l'un au moins des éléments suivants :
- un ordinateur autonome ;
- un appareil mobile ;
- un appareil installé à un noeud d'un système logistique ;
- une machine de tri d'unités d'expédition et/ou un appareil d'examen d'unités d'expédition ;
- un véhicule de transport destiné à transporter des unités d'expédition ;
- un véhicule aérien sans pilote (UAV) ;
- un véhicule terrestre sans pilote (UGV) ;
- un robot, par exemple un robot équipé d'au moins une caméra intégrée, un robot de tri, un robot collaboratif, un robot navette et/ou un robot de prélèvement ;
- un dispositif de commande d'un tapis roulant.

13. Dispositif comprenant des moyens pour mettre en œuvre le procédé selon l'une quelconque des revendications 1 à 10.

14. Code de programme informatique, ledit code de programme informatique, lorsqu'il est exécuté par un processeur, amenant un dispositif à mettre en œuvre le procédé selon l'une quelconque des revendications 1 à 10.

15. Support de stockage non transitoire lisible par ordinateur sur lequel est stocké un code de programme informatique, ledit code de programme informatique, lorsqu'il est exécuté par un processeur, amenant au moins un dispositif à exécuter les étapes du procédé selon l'une quelconque des revendications 1 à 10.
